# EUROPEAN PATENT APPLICATION

(11) **EP 4 507 351 A1**
(43) Date of publication of application: **12.02.2025**
(21) Application number: 23778453.3
(22) Date of filing: 31.03.2023
(51) Int. Cl.: H04W 12/02

(54) **METHOD AND APPARATUS FOR PROCESSING SENSING SIGNAL, AND COMMUNICATION DEVICE**

(30) Priority: 02.04.2022 CN 202210351912
(71) Applicant: Vivo Mobile Communication Co., Ltd., Dongguan, Guangdong 523863 (CN)
(72) Inventor: JIANG, Dajie, Dongguan, Guangdong 523863 (CN); LI, Jianzhi, Dongguan, Guangdong 523863 (CN); YUAN, Yannan, Dongguan, Guangdong 523863 (CN)
(74) Representative: Shieldmark
(86) International application number: PCT/CN2023/085455
(87) International publication number: WO 2023/186089

(57) **Abstract**

This application discloses a sensing signal processing method and apparatus, and a communication device. The method includes: receiving, by a first communication device, a first requirement from a second communication device, and determining, by the first communication device, first information based on the first requirement; or receiving, by a first communication device, first information from a second communication device; and transmitting, by the first communication device to a third communication device or a fourth communication device, a first sensing signal corresponding to second information, where the first requirement includes at least one of the following: a fuzzification requirement related to wireless sensing, a sensing privacy requirement, and a sensing error requirement; the first information or the second information includes at least one of the following: parameter information of the sensing signal and resource information of the sensing signal; and the first information is the same as or different from the second information.

## Description

### CROSS-REFERENCE TO RELATED APPLICATIONS

This application claims priority to Chinese Patent Application No. 202210351912.8, filed in China on April 2, 2022, which is incorporated herein by reference in its entirety.

### TECHNICAL FIELD

This application pertains to the field of communication technologies, and specifically relates to a sensing signal processing method and apparatus, and a communication device.

### BACKGROUND

A future mobile communication system such as a beyond fifth generation (Beyond 5^{th} Generation, B5G) mobile communication system or a sixth generation (6^{th} Generation, 6G) mobile communication system also has a sensing capability in addition to a communication capability.

By transmitting and receiving radio signals, one or more devices having a sensing capability can sense an orientation, a distance, a speed, and other information of a target object, or perform an operation such as detection, tracking, recognition, or imaging on a target object, event, environment, or the like. In the future, with deployment of small-cell base stations having high-band and large-bandwidth capabilities such as millimeter-wave communication and terahertz communication in a 6G network, a sensing resolution is significantly improved in comparison with centimeter-wave communication, so that the 6G network can provide a more refined sensing service.

**Table 1: Typical sensing functions and application scenarios**

| Communication and sensing category | Sensing function | Application scenario |
|---|---|---|
| Macro sensing | Weather condition, air quality, and the like | Meteorology, agriculture, and life service |
| | Vehicular flow (crossing), and pedestrian flow (metro entrance) | Intelligent transportation and commercial service |
| | Target tracking, ranging, speed measurement, contour, and the like | Many application scenarios of conventional radars |
| | Environment reconstruction | Intelligent driving and navigation (vehicle or unmanned aerial vehicle), smart city (3D map), and network planning and optimization |
| Refined sensing | Action/posture/expression recognition | Intelligent interaction, game, and smart home using a smartphone |
| | Heartbeat, respiration, and the like | Health and medical care |
| | Imaging, material detection, component analysis, and the like | Security, industry, biological medicine, and the like |

However, a sensing result of a target object obtained through wireless sensing is private. How to reduce a risk of sensing result leakage is an urgent problem to be resolved.

### SUMMARY

Embodiments of this application provide a sensing signal processing method and apparatus, and a communication device to resolve a problem of how to reduce a risk of sensing result leakage.

According to a first aspect, a sensing signal processing method is provided and includes:
receiving, by a first communication device, a first requirement from a second communication device, and determining, by the first communication device, first information based on the first requirement; or receiving, by a first communication device, first information from a second communication device; and transmitting, by the first communication device to a third communication device or a fourth communication device, a first sensing signal corresponding to second information, where the first requirement includes at least one of the following: a fuzzification requirement related to wireless sensing, a sensing privacy requirement, and a sensing error requirement; the first information or the second information includes at least one of the following: parameter information of the sensing signal and resource information of the sensing signal; and the first information is the same as or different from the second information.

According to a second aspect, a sensing signal processing method is provided and includes:
transmitting, by a second communication device, a first requirement or first information to a first communication device, where
the first requirement includes at least one of the following: a fuzzification requirement related to wireless sensing, a sensing privacy requirement, and a sensing error requirement; and the first information includes at least one of the following: parameter information of a sensing signal and resource information of the sensing signal.

According to a third aspect, a sensing signal processing method is provided and includes:
receiving, by a sensing signal receiving device, a first sensing signal corresponding to second information and transmitted by a first communication device, where the second information includes at least one of the following: parameter information of the sensing signal and resource information of the sensing signal; and
detecting, by the sensing signal receiving device, the first sensing signal to obtain a first sensing measurement quantity, where
the sensing signal receiving device includes a third communication device or a fourth communication device.

According to a fourth aspect, a sensing signal processing apparatus is provided and applied to a first communication device and includes:
a first receiving module, configured to receive a first requirement from a second communication device, and determine first information based on the first requirement; or receive first information from a second communication device; and
a sixth transmitting module, configured to transmit, to a third communication device or a fourth communication device, a first sensing signal corresponding to second information, where
the first requirement includes at least one of the following: a fuzzification requirement related to wireless sensing, a sensing privacy requirement, and a sensing error requirement; the first information or the second information includes at least one of the following: parameter information of the sensing signal and resource information of the sensing signal; and the first information is the same as or different from the second information.

According to a fifth aspect, a sensing signal processing apparatus is provided and applied to a second communication device and includes:
a tenth transmitting module, configured to transmit a first requirement or first information to a first communication device, where
the first requirement includes at least one of the following: a fuzzification requirement related to wireless sensing, a sensing privacy requirement, and a sensing error requirement; and the first information includes at least one of the following: parameter information of a sensing signal and resource information of the sensing signal.

According to a sixth aspect, a sensing signal processing apparatus is provided and applied to a sensing signal receiving device, where the sensing signal receiving device includes a third communication device or a fourth communication device, and the apparatus includes:
a sixteenth receiving module, configured to receive a first sensing signal corresponding to second information and transmitted by a first communication device, where the second information includes at least one of the following: parameter information of the sensing signal and resource information of the sensing signal; and
a first detection module, configured to detect the first sensing signal to obtain a first sensing measurement quantity.

According to a seventh aspect, a communication device is provided and includes a processor, a memory, and a program or instructions stored in the memory and capable of running on the processor. When the program or instructions are executed by the processor, the steps of the method according to the first aspect, the second aspect, or the third aspect are implemented.

According to an eighth aspect, a readable storage medium is provided. The readable storage medium stores a program or instructions. When the program or instructions are executed by a processor, the steps of the method according to the first aspect, the second aspect, or the third aspect are implemented.

According to a ninth aspect, a chip is provided. The chip includes a processor and a communication interface. The communication interface is coupled to the processor. The processor is configured to run a program or instructions to implement the steps of the method according to the first aspect, the second aspect, the third aspect, or the fourth aspect.

According to a tenth aspect, a computer program or program product is provided. The computer program or program product is stored in a non-transitory storage medium. The program or program product is executed by at least one processor to implement the steps of the method according to the first aspect, the second aspect, or the third aspect.

According to an eleventh aspect, a communication system is provided. The communication system includes a terminal and a network device. The terminal is configured to perform the steps of the method according to the first aspect or the third aspect. The network device is configured to perform the steps of the method according to the first aspect, the second aspect, or the third aspect.

In the embodiments of this application, the first communication device may determine the parameter information of the sensing signal and/or the resource information of the sensing signal based on the first requirement, or the first communication device may receive, from the second communication device, the parameter information of the sensing signal and/or the resource information of the sensing signal that are/is determined by the second communication device based on the first requirement, where the first communication device is used as a sensing signal transmit end, and the first requirement includes at least one of the fuzzification requirement related to wireless sensing, the sensing privacy requirement, and the sensing error requirement. This is equivalent to performing fuzzification processing on the parameter information of the sensing signal and/or the resource information of the sensing signal at the sensing signal transmit end. Therefore, privacy of the sensing measurement quantity is improved, further, privacy of a sensing result is improved, and a risk of sensing result leakage is reduced, while the sensing result can meet a sensing requirement.

### BRIEF DESCRIPTION OF DRAWINGS

FIG. 1 is a schematic diagram of different sensing links in integrated communication and sensing;
FIG. 2 is a schematic architectural diagram of a wireless communication system according to an embodiment of this application;
FIG. 3 is a first flowchart of a sensing signal processing method according to an embodiment of this application;
FIG. 4 is a second flowchart of a sensing signal processing method according to an embodiment of this application;
FIG. 5 is a third flowchart of a sensing signal processing method according to an embodiment of this application;
FIG. 6 is a fourth flowchart of a sensing signal processing method according to an embodiment of this application;
FIG. 7 to FIG. 13 are flowcharts of sensing signal processing methods according to Embodiment 1;
FIG. 14 to FIG. 19 are flowcharts of sensing signal processing methods according to Embodiment 2;
FIG. 20 is a first schematic diagram of a sensing signal processing apparatus according to an embodiment of this application;
FIG. 21 is a second schematic diagram of a sensing signal processing apparatus according to an embodiment of this application;
FIG. 22 is a third schematic diagram of a sensing signal processing apparatus according to an embodiment of this application;
FIG. 23 is a schematic diagram of a terminal according to an embodiment of this application;
FIG. 24 is a schematic diagram of a network device according to an embodiment of this application; and
FIG. 25 is a schematic diagram of a communication device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6th Generation, 6G) communication system.

First, the following technical points are described to facilitate understanding of the embodiments of this application.

### I. Description of a wireless sensing result (hereinafter referred to as a sensing result)

The sensing result includes but is not limited to the following aspects:
(1) position or trajectory information of a sensing object: for example, accurate position information is private;
(2) characteristics of a sensing object (such as a human body): for example, information such as body contour characteristics, face information, whether a heart rate increases, and whether breathing is short, is private;
(3) health: for example, blood oxygen, blood pressure, sleep quality, and other information of people belong to personal private information;
(4) map construction or 3D environment reconstruction: map information or environment reconstruction information of some sensitive areas or sensitive buildings belongs to private information;
(5) radar type: for example, a result of ranging, speed measurement, or angle measurement by the radar type, and sensing results of some sensing objects may be private; and
(6) imaging: for example, imaging results of some sensing objects are private.

### II. Description of integrated communication and sensing

The integrated communication and sensing is to implement an integrated design of communication and sensing functions through spectrum sharing and hardware sharing in a same system. While transmitting information, the system can sense information such as an orientation, a distance, and a speed, and detect, track, and recognize a target device or event. A communication system and a sensing system complement each other to improve overall performance and bring better service experience.

Communication-radar integration is a typical application of integrated communication and sensing (integration of communication and sensing). In the past, a radar system and a communication system were strictly distinguished because of different research objects and focuses, and the two systems were studied independently in most scenarios. Actually, the radar and the communication system are also typical ways of information transmitting, obtaining, processing, and exchange, and there are many similarities in operating principles, system architectures, and frequency bands. An integrated design of communication and radar has great feasibility, which is mainly reflected in the following aspects: Firstly, both the communication system and the sensing system are based on an electromagnetic wave theory, and complete information obtaining and transmission by using electromagnetic wave transmission and reception. Secondly, both the communication system and the sensing system have antennas, transmit ends, receive ends, signal processors, and other structures, and hardware resources of the two systems greatly overlap. With development of technologies, operating frequency bands of the two systems increasingly overlap. In addition, there are similarities in key technologies such as signal modulation, reception/detection, and a waveform design. Communication-radar system integration can bring many advantages, such as reducing costs, reducing a size, reducing power consumption, improving spectrum efficiency, and reducing mutual interference, thereby improving overall performance of the system.

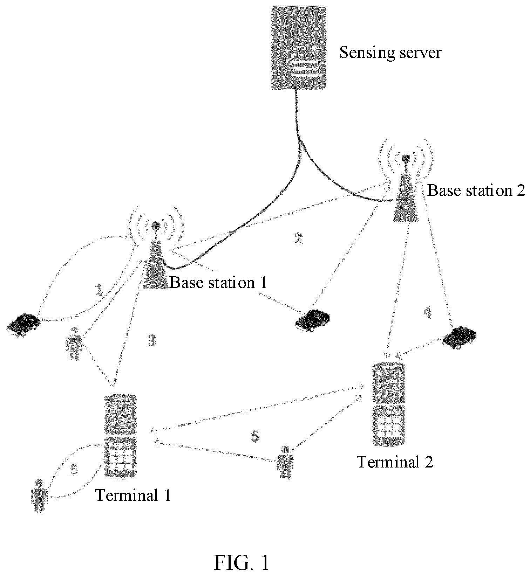

As shown in FIG. 1, based on a difference between a sensing signal transmitting node and a sensing signal receiving node, there are six types of sensing links. It should be noted that each sensing link in FIG. 1 uses one transmitting node and one receiving node as an example. In an actual system, different sensing links may be selected based on different sensing requirements, and each sensing link may include one or more transmitting nodes and receiving nodes, and the actual sensing system may include a variety of different sensing links. In FIG. 1, people and vehicles are used as examples of sensing objects, and sensing objects in the actual system are more abundant. It may be understood that a sensing server in FIG. 1 may also be a sensing network function or sensing network element or Sensing Management Function (Sensing MF).

The six types of sensing links include:
Sensing link 1: echo sensing by a base station. In this manner, a base station transmits a sensing signal and obtains a sensing result by receiving an echo of the sensing signal.
Sensing link 2: air interface sensing between base stations. In this case, base station 2 receives a sensing signal transmitted by base station 1 and obtains a sensing result.
Sensing link 3: uplink air interface sensing. In this case, a base station receives a sensing signal transmitted by user equipment (User Equipment, UE) and obtains a sensing result.
Sensing link 4: downlink air interface sensing. In this case, UE receives a sensing signal transmitted by a base station and obtains a sensing result.
Sensing link 5: echo sensing by a terminal. In this case, UE transmits a sensing signal and obtains a sensing result by receiving an echo of the sensing signal.
Sensing link 6: sidelink (Sidelink, SL) sensing between terminals. For example, UE 2 receives a sensing signal transmitted by UE 1 and obtains a sensing result.

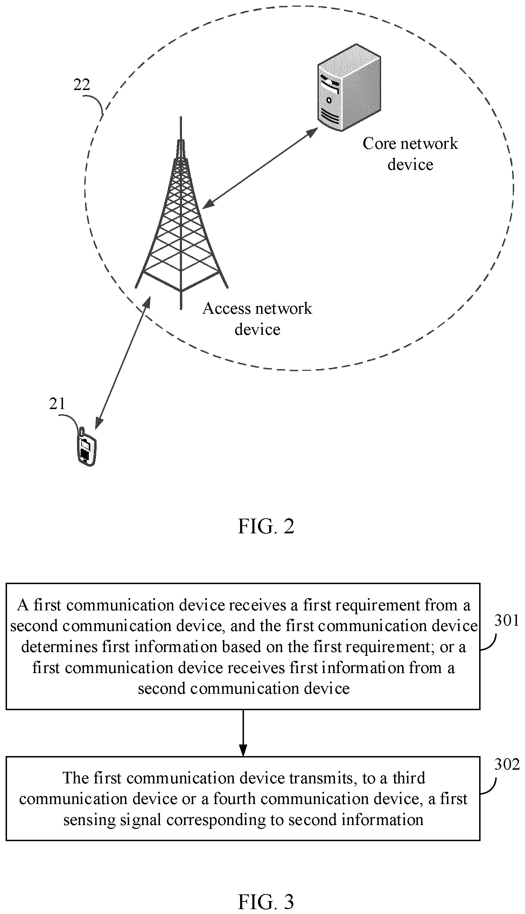

FIG. 2 is a block diagram of a wireless communication system to which an embodiment of this application can be applied. The wireless communication system includes a terminal 21 and a network device 22. The terminal 21 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), vehicle user equipment (Vehicle User Equipment, VUE), pedestrian user equipment (Pedestrian User Equipment, PUE), a smart home (a home device having a wireless communication function, such as a refrigerator, a television, a washing machine, or furniture), a game console, a personal computer (personal computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, a game console, or the like. It should be noted that a specific type of the terminal 21 is not limited in the embodiments of this application.

The network device 22 may include an access network device or a core network device. The access network device 12 may also be referred to as a radio access network device, a radio access network (Radio Access Network, RAN), a radio access network function, or a radio access network element. The access network device 22 may include a base station, a wireless local area network (Wireless Local Area Network, WLAN) access point, a Wireless Fidelity (Wireless Fidelity, Wi-Fi) node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmission and reception point (Transmitting Receiving Point, TRP), or another appropriate term in the art. As long as the same technical effect is achieved, the base station is not limited to specific technical terms. It should be noted that in the embodiments of this application, only a base station in an NR system is used as an example for description, but a specific type of the base station is not limited.

The core network device may include but is not limited to at least one of the following: a core network node, a core network function, a mobility management entity (Mobility Management Entity, MME), an access and mobility management function (Access and Mobility Management Function, AMF), a location management function (Location Management Function, LMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), or the like. It should be noted that in the embodiments of this application, only a core network device in the NR system is used as an example for description, but a specific type of the core network device is not limited.

A sensing signal processing method and apparatus, and a communication device provided in embodiments of this application are hereinafter described in detail by using some embodiments and application scenarios thereof with reference to the accompanying drawings.

In an optional embodiment of this application, a sensing signal may be a signal with only a sensing function but no communication function, such as a long term evolution (Long Term Evolution, LTE) or new radio (New Radio, NR) synchronization signal or a reference signal in the related art. The sensing signal may be based on a pseudo-random sequence, including an m sequence, a Zadoff-Chu sequence, a Gold sequence, or the like; or the sensing signal may be a single-frequency continuous wave (Continuous Wave, CW), a frequency modulated continuous wave (Frequency Modulated CW, FMCW), an ultra-wideband Gaussian pulse, or the like commonly used in a radar; or may be a newly designed special sensing signal with good correlation characteristics and a low peak-to-average power ratio (Peak-to-Average Power Ratio, PAPR), or may be a newly designed integrated communication and sensing signal with both a sensing function and a communication function. In this specification, the sensing signal or the integrated communication and sensing signal is referred to as a sensing signal.

It should be noted that a first communication device, a second communication device, a third communication device, and a fourth communication device are all described as one device in this application. This application is also applicable to more than one first communication device, second communication device, third communication device, and/or fourth communication device, that is, a quantity of first communication devices, a quantity of second communication devices, a quantity of third communication devices, and/or a quantity of fourth communication devices are/is not limited. In a case of more than one first communication device, second communication device, third communication device, and/or fourth communication device, a plurality of devices may transmit sensing signals to one device, or one device may receive sensing signals transmitted by a plurality of devices, and one device receives sensing measurement quantities transmitted by a plurality of devices, or the like. This is not repeated later.

Referring to FIG. 3, an embodiment of this application provides a sensing signal processing method, applied to a first communication device. Specific steps include step 301 and step 302.

Step 301: The first communication device receives a first requirement from a second communication device, and the first communication device determines first information based on the first requirement; or the first communication device receives first information from a second communication device.

Step 302: The first communication device transmits, to a third communication device or a fourth communication device, a first sensing signal corresponding to second information.

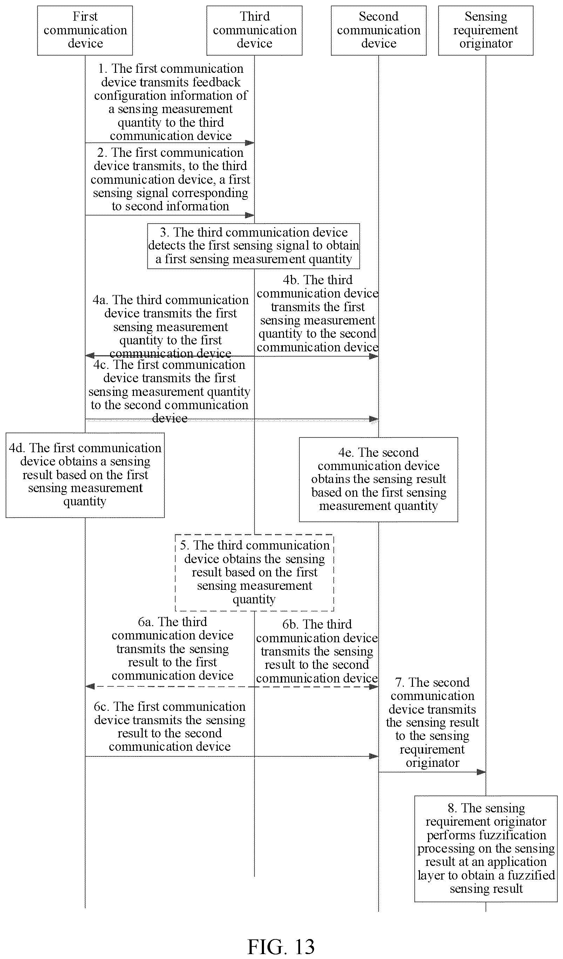

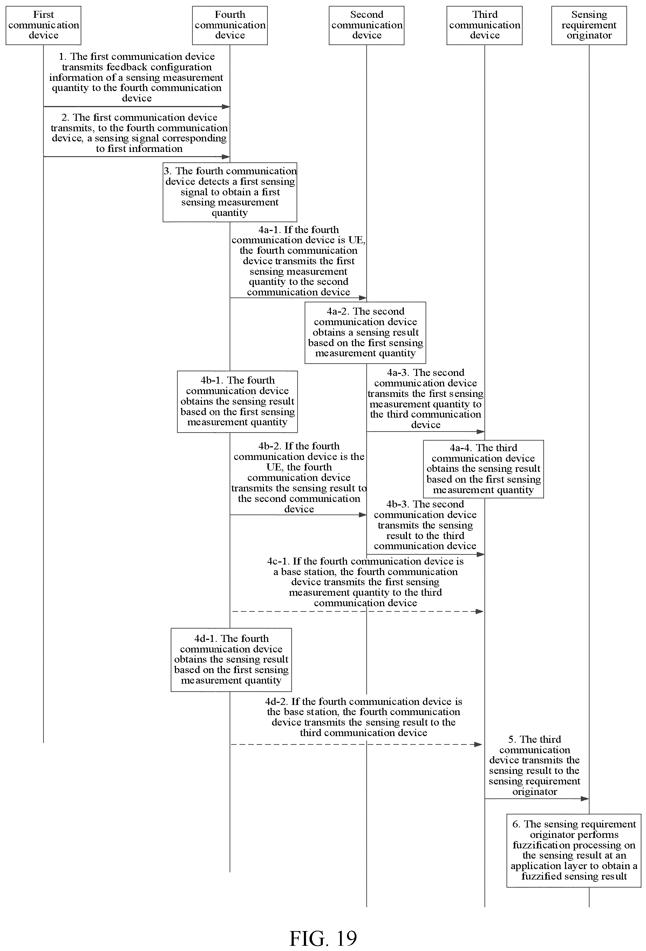

For "the first communication device transmits, to a third communication device, a first sensing signal corresponding to second information", refer to FIG. 13 in Embodiment 1. For "the first communication device transmits, to a fourth communication device, a first sensing signal corresponding to second information", refer to FIG. 19 in Embodiment 2.

The first requirement includes at least one of the following: a fuzzification requirement related to wireless sensing, a sensing privacy requirement, and a sensing error requirement.

Optionally, the first requirement includes at least one of the following:
(a) Fuzzification requirement or privacy requirement for a position of a sensed sensing object.

For example, a random deviation ranging from -1 meter to 1 meter is added to the position of the sensed sensing object, or a random angle error of -5 degrees to +5 degrees is added to angle information. It may be understood that the foregoing distance value and specific angle value are not limited in this embodiment.

### (b) Adding a deviation to trajectory information.

For example, a trajectory includes a plurality of positions at different times. To keep a fuzzified trajectory continuous, position errors at different times need to be continuous.

### (c) Characteristics of a sensing object (such as a human body).

For example, radio signals are used to scan human body contour characteristics only for a purpose of virtual fitting, but more detailed information cannot be obtained for other purposes. In this case, the first requirement may be a minimum 3D sensing resolution, for example, 5cm × 5cm × 5cm. It may be understood that the minimum 3D sensing resolution is not limited in this embodiment.

### (d) Characteristics of imaging.

For example, imaging results of some sensing objects such as face information are private, and 2D information of a face is obtained through scanning by using radio signals. In this case, the first requirement may be a minimum 2D sensing resolution, for example, 2 cm× 2 cm. In this case, the first requirement is not to display a sensing result of the face, but only to display sensing results of other human parts. It may be understood that the minimum 2D sensing resolution is not limited in this embodiment.

### (e) Characteristics of map construction or 3D environment reconstruction.

For example, map information or environment reconstruction information of some sensitive areas or sensitive buildings belongs to private information. In this case, the first requirement includes characteristic information of the sensitive areas or sensitive buildings, such as position information, and a minimum resolution of map construction of the sensitive areas or sensitive buildings (for example, the minimum resolution of map construction of the sensitive areas or sensitive buildings is 10 m × 10 m × 10 m, and a minimum resolution of map construction of other non-sensitive areas is 1 m × 1 m × 1 m). It may be understood that the minimum resolution of the foregoing map construction or 3D environment reconstruction is not limited in this embodiment.

### (f) Characteristics of a radar.

For example, a result of ranging, speed measurement, or angle measurement by the radar type, and sensing results of some sensing objects may be private. In this case, the first requirement is a resolution requirement for ranging, speed measurement, or angle measurement of some sensing objects. For example, a minimum speed resolution is 1 meter per second, a minimum distance resolution is 10 meters, and a minimum angle resolution is 10 degrees. For another example, the first requirement is: adding an absolute error to the result of ranging, speed measurement, or angle measurement, or adding a 10% error to a relative error, such as the result of ranging, speed measurement, or angle measurement.

### (g) A minimum granularity requirement or quantification requirement of a human heart rate and respiratory rate obtained through wireless sensing. For example, a minimum heart rate granularity is 5 times/minute, and a minimum respiratory rate granularity is 2 times/minute.

### (h) Health characteristics.

For example, blood oxygen, blood pressure, sleep quality, and other information of people belong to personal private information. In this case, the first requirement is, for example, a minimum granularity of blood oxygen or blood pressure.

Optionally, the first requirement may further include at least one of a first fuzzification mode, a second fuzzification mode, and a third fuzzification mode.

The first information includes at least one of the following: parameter information of the sensing signal and resource information of the sensing signal.

Optionally, the parameter information of the sensing signal includes at least one of the following:
(a) Waveform: For example, orthogonal frequency division multiplexing (Orthogonal Frequency Division Multiplexing, OFDM) waveform, a single-carrier frequency-division multiple access (Single-carrier Frequency-Division Multiple Access, SC-FDMA) waveform, an orthogonal time frequency space (Orthogonal Time Frequency Space, OTFS)waveform, an FMCW, or a pulse signal.
(b) Subcarrier spacing: For example, a subcarrier spacing of an OFDM system is 30 kHz.
(c) Guard interval: A time interval from an end time of transmitting a signal to a time when a latest echo signal of the signal is received. This parameter is proportional to a maximum sensing distance.

For example, the guard interval may be obtained through calculation by using 2 dmax/c, where dmax is the maximum sensing distance (belonging to a sensing requirement), and c is the speed of light. For example, for a self-transmitted and self-received sensing signal, dmax represents a maximum distance from a sensing signal transmission and reception point to a signal transmission point. In some cases, a cyclic prefix (Cyclic Prefix, CP) of an OFDM signal may play a role of a minimum guard interval.

### (d) Bandwidth parameter.

This bandwidth parameter is inversely proportional to a distance resolution and may be obtained by using c/2/delta_d, where delta_d is the distance resolution (belonging to the sensing requirement).

### (e) Burst (burst) duration parameter.

For example, the burst duration parameter is inversely proportional to a rate resolution (belonging to the sensing requirement), and the burst duration parameter is a time span of the sensing signal, mainly for calculating a Doppler shift. The burst duration parameter may be obtained through calculation by using c/2/delta_v/fc, where delta_v is the rate resolution, and fc is a carrier frequency of the signal or a center frequency of the signal.

### (f) Time domain interval parameter.

For example, the time domain interval parameter may be obtained through calculation by using c/2/fc/v_range, where v_range is a maximum rate minus a minimum rate (belonging to the sensing requirement), and this parameter is a time interval between two adjacent sensing signals.

### (g) Transmit signal power information.

For example, the power information includes at least one of the following: transmit power, peak power, average power, total power, power spectrum density, effective isotropic radiated power (Effective Isotropic Radiated Power, EIRP), and power of each port. For example, for the transmit power, one value is taken from -20 dBm to 23 dBm at intervals of 2 dBm.

### (h) Signal format.

For example, the signal format is a sounding reference signal (Sounding Reference Signal, SRS), a demodulation reference signal (Demodulation Reference Signal, DMRS), a positioning reference signal (Positioning Reference Signal, PRS), or the like, or another predefined signal, and other information such as a related sequence format (the sequence format is associated with sequence content, a sequence length, or the like).

### (i) Signal direction.

For example, direction or beam information of the sensing signal.

### (j) Beam information or quasi co-location (quasi co-location, QCL) relationship.

For example, the sensing signal includes a plurality of resources, and each resource is QCLed with one synchronization signal block (Synchronization Signal and PBCH block, SSB). The QCL includes type A (Type A), type B (Type B), type C (Type C), or type D (Type D).

Quasi co-location relationship: If channel characteristics on one antenna port symbol may be derived from another antenna port, it is considered that the two ports are QCLed, and a channel estimation result obtained from one port may be used for another port. For example, it may be considered that the two ports are from a same transmission source. A QCL configuration may include many different signal types, such as a channel state reference signal (Channel State Information Reference Signal, CSI-RS), an SSB, or an SRS. A network device may configure corresponding QCL configurations for different beams. The network device may change, by changing a QCL configuration of a terminal (UE), a working beam of the terminal.

There are four QCL types in a 5G system, specifically as shown in the following Table 2.

**Table 2**

| Type | Characteristic | Function |
|---|---|---|
| QCL-TypeA | Doppler shift, Doppler spread, average delay, and delay spread | Obtain channel estimation information |
| QCL-TypeB | Doppler shift and Doppler spread | Obtain channel estimation information |
| QCL-TypeC | Doppler shift and average delay | Obtain measurement information such as reference signal received power |
| QCL-TypeD | Spatial receive (Rx receive) parameter | Assist the terminal in beamforming |

(k) Antenna configuration parameter (suitable for a multi-antenna device to receive and transmit a sensing signal). For example, at least one of a transmit antenna orthogonal mode (time division multiplexing (Time division multiplexing, TDM) or code division multiplexing (code division multiplexing, CDM) or frequency division multiplexing (frequency division multiplex, FDM), or the like), a quantity of antenna ports, a quantity of antenna units, a distance between antenna units, a quantity of receive channels, a quantity of transmit channels, a quantity of transmit antennas, and a (maximum) quantity of uplink or downlink multiple-input multiple-output (Multi Input Multi Output, MIMO) layers.

Optionally, the resource information of the sensing signal includes at least one of the following:
(a) Time resource.

For example, the time resource is an index of a slot in which the sensing signal is located or an index of a symbol in the slot. There are two types of time resources. One type is a one-off time resource. For example, an omnidirectional first signal is transmitted on one symbol. The other type is a non-one-off time resource. For example, in a plurality of groups of periodic time resources or discontinuous time resources (which may include a start time and an end time), sensing signals in a same direction are transmitted in each group of periodic time resources, and beam directions on periodic time resources of different groups are different.

### (b) Frequency resource.

For example, the frequency domain resource includes a center frequency, a bandwidth, a radio bearer (Radio Bearer, RB), a subcarrier, or the like of the sensing signal.

It should be noted that for the descriptions of the first communication device, the second communication device, the third communication device, and the fourth communication device in the embodiment shown in FIG. 3, reference may be made to the descriptions in Embodiment 1 and Embodiment 2.

In an implementation of this application, the method further includes:
the first communication device receives a second requirement from the second communication device, where the second requirement includes a sensing requirement.

Optionally, the sensing requirement includes at least one of the following:
(a) Sensing target area.

The sensing target area refers to a possible location area of a sensing object or a location area that requires imaging or three-dimensional reconstruction.

### (b) Sensing object type.

Sensing objects are classified based on their possible moving characteristics, and each sensing object type includes information such as a moving speed, a moving acceleration, and a typical radar cross section (Radar Cross Section, RCS) of a typical sensing object.

### (c) Sensing quality of service (Quality of Service, QoS).

A performance indicator for sensing the sensing target area or the sensing object includes at least one of the following:
(1) Sensing resolution.
   Optionally, the sensing resolution may be further divided into a ranging resolution, an angle measurement resolution, a speed measurement resolution, an imaging resolution, and the like.
(2) Sensing accuracy.
   Optionally, the sensing accuracy may be further divided into ranging accuracy, angle measurement accuracy, speed measurement accuracy, positioning accuracy, and the like.
(3) Sensing range.
   Optionally, the sensing range may be further divided into a ranging range, a speed measurement range, an angle measurement range, an imaging range, and the like.
(4) Sensing delay.
   Optionally, the sensing delay may be understood as a time interval from transmitting of a sensing signal to obtaining of a sensing result, or a time interval from origination of a sensing requirement to obtaining of a sensing result.
(5) Sensing update rate.
   Optionally, the sensing update rate may be understood as a time interval between two consecutive times of performing sensing and obtaining sensing results.
(6) Detection probability.
   Optionally, the detection probability may be understood as a probability that a sensing object is correctly detected in presence of the sensing object.
(7) False alarm probability.
   Optionally, the false alarm probability may be understood as a probability that a sensing target is incorrectly detected in absence of a sensing object.

In an implementation of this application, that the first communication device determines first information based on the first requirement includes:
the first communication device determines the first information based on the first requirement and the second requirement.

In an implementation of this application, the method further includes:
the first communication device transmits the second requirement to the third communication device.

In an implementation of this application, the method further includes:
the first communication device transmits a sensing measurement quantity that needs to be fed back by the third communication device and/or measurement configuration information to the third communication device.

Optionally, the sensing measurement quantity includes at least one of the following (level-1 measurement quantities): a complex value of the received sensing signal or a sensing signal channel response, an amplitude, a phase, inphase data, quadrature data, a channel matrix, channel state information, reference signal received power, a received signal strength indicator, a channel power delay spectrum, a Doppler power spectrum, a Doppler spread, a coherence bandwidth, a coherence time, an angle, power of each path in a multi-path channel, a delay of each path in the multi-path channel, an angle of each path in the multi-path channel, a Doppler frequency shift, a time of flight (Time of flight, ToF), an RCS, a quotient of frequency domain channel responses of first and second antennas, a conjugate product of the frequency domain channel responses of the first and second antennas, an amplitude ratio of received signals of the first and second antennas, an amplitude difference of the received signals of the first and second antennas, a phase difference of the first and second antennas, and angle related information of the first and second antennas, where the first antenna and the second antenna are receive antennas of the first communication device.

Optionally, the sensing measurement quantity may alternatively be a measurement quantity (level-2 measurement quantity) obtained by performing a simple operation on at least one of the foregoing items (that is, level-1 measurement quantities), or a measurement quantity (level-2 measurement quantity) obtained by complex operation of at least one of the foregoing items. Algorithms for obtaining a level-2 measurement quantity from a level-1 measurement quantity may include: addition, subtraction, multiplication, division, matrix addition, matrix subtraction, matrix multiplication, matrix transposition, trigonometric relation operation, square root operation, power operation, and the like, as well as threshold detection results and maximum or minimum extraction results of the foregoing operation results. The foregoing complex operations include fast Fourier transform (Fast Fourier Transform, FFT) or inverse fast Fourier transform (Inverse Fast Fourier Transform, IFFT), discrete Fourier transform (Discrete Fourier Transform, DFT) or inverse discrete Fourier transform (Inverse Discrete Fourier Transform, IDFT), 2D-FFT, 3D-FFT, matched filtering, autocorrelation operation, wavelet transform, digital filtering, and the like, as well as threshold detection results and maximum or minimum extraction results of the foregoing operation results.

Optionally, the measurement configuration information includes at least one of the following:
(1) Identification information of the sensing signal corresponding to the measurement quantity.

For example, the identification information of the sensing signal corresponding to the measurement quantity includes at least one of the following: sensing signal information corresponding to the sensing measurement quantity, time information and frequency information of the sensing measurement quantity, information of a base station or TRP transmitting the sensing signal, information of an antenna port transmitting the sensing signal, information of a receive antenna of the third communication device, and the like.

### (2) Period of measurement.

In an implementation of this application, before the first communication device transmits the sensing measurement quantity that needs to be fed back by the third communication device and/or the measurement configuration information to the third communication device, the method further includes:
the first communication device receives, from the second communication device, the sensing measurement quantity that needs to be fed back by the third communication device and/or the measurement configuration information;
   or
the first communication device determines the sensing measurement quantity that needs to be fed back by the third communication device and/or the measurement configuration information.

In an implementation of this application, the method further includes:
the first communication device determines a first fuzzification mode based on the first requirement or based on the first requirement and the second requirement, where
the first fuzzification mode is a fuzzification mode for some or all sensing measurement quantities.

The fuzzification mode in this specification may be referred to as a fuzzification mode, a fuzzification method, or the like.

In an implementation of this application, the method further includes:
the first communication device receives a second fuzzification mode from the second communication device, where
the second fuzzification mode is a fuzzification mode for some or all sensing measurement quantities.

In an implementation of this application, the method further includes:
the first communication device transmits the second information to the third communication device.

It should be noted that for the descriptions of the parameter information of the sensing signal and the resource information of the sensing signal in the second information, reference may be made to the descriptions of the parameter information of the sensing signal and the resource information of the sensing signal in the first information. Details are not described herein again.

In an implementation of this application, the method further includes:
the first communication device transmits at least one of the first fuzzification mode and the second fuzzification mode to the third communication device.

Optionally, the third communication device may perform fuzzification processing in the following first fuzzification mode and/or second fuzzification mode in the following cases:
(1) Performing fuzzification processing on the sensing signal to obtain the sensing measurement quantity.
   For example, fuzzification processing is performed on the received sensing signal or sensing signal channel response, including the complex value, amplitude, phase, inphase data, or quadrature data of the received sensing signal or sensing signal channel response, and then the sensing measurement quantity is obtained based on the complex value, amplitude, phase, inphase data, or quadrature data of the fuzzified sensing signal or sensing signal channel response, where the sensing measurement quantity includes the delay, Doppler frequency shift, angle, signal strength, or the like.
(2) Performing fuzzification processing in a process of generating a level-(N+1) sensing measurement quantity based on a level-N sensing measurement quantity, where n is an integer greater than or equal to 1.
   For example, an initial sensing measurement quantity is determined based on the sensing signal, and fuzzification processing is performed on the initial sensing measurement quantity to obtain a new sensing measurement quantity. For example, the initial sensing measurement quantity such as the delay, Doppler frequency shift, angle, or strength is determined based on the sensing signal, and then fuzzification processing is performed on the initial sensing measurement quantity, to obtain a new sensing measurement quantity such as a distance, a speed, an orientation, a spatial position, or an acceleration.
(3) Performing fuzzification processing in a process of generating a sensing result based on the sensing measurement quantity.
(4) Performing fuzzification processing in a process of generating a level-(N+1) sensing result based on a N-level sensing result (N is an integer greater than or equal to 1), where the level-N and level-(N+1) sensing results may also be sensing measurement quantities.

Optionally, the first fuzzification mode or the second fuzzification mode includes at least one of the following:
(1) Adding noise to the sensing measurement quantity or the sensing result:
   The noise may include high-frequency noise or low-frequency noise. For example, a detail component is generally reflected in a high frequency. Therefore, if the first requirement is only to display a sensed contour, adding high-frequency noise may be considered.
   The noise may also include random noise and continuous noise, where the continuous noise includes Perlin noise, Worley noise, fractal noise, curl noise, or the like.
(2) Adding an error to the sensing measurement quantity or the sensing result, where the error includes a biased error (an average value of random errors is not 0) or an unbiased error (an average value of random errors is 0).
(3) Performing partial information culling (or downsampling) on the sensing measurement quantity or the sensing result.
(4) Reducing a sampling rate of the sensing measurement quantity or the sensing result, for example, reducing an image sampling rate of a sensing imaging result, or cutting out some pixels, or using an average value of N adjacent pixels (N is an integer greater than 1).
(5) Reducing a resolution of the sensing measurement quantity or the sensing result, for example, dividing information such as the measured speed or distance or angle into intervals, and for a measurement quantity or a sensing result that falls within an interval, replacing the input measurement quantity or sensing result with an upper or lower limit of the interval or an arithmetic or geometric average value.

It should be noted that the fuzzification processing may be performed on the sensing measurement quantity based on a frequency band or a time or an antenna, or the fuzzification processing may be performed on the sensing measurement quantity or the sensing result based on a coordinate or Heatmap area (for example, only for a coordinate area with a high privacy requirement).

In an implementation of this application, the method further includes:
the first communication device transmits feedback configuration information of the sensing measurement quantity to the third communication device.

Optionally, the feedback configuration information of the sensing measurement quantity includes at least one of the following:
(1) a time domain resource for feeding back a target sensing measurement quantity;
(2) a frequency domain resource for feeding back the target sensing measurement quantity; and
(3) a granularity or step for feeding back the target sensing measurement quantity.

In an implementation of this application, the method further includes:
the first communication device receives a first sensing measurement quantity that is of the first sensing signal and that is transmitted by the third communication device;
   or
the first communication device receives a sensing result that is of a first sensing measurement quantity and that is transmitted by the third communication device.

Optionally, the sensing result includes at least one of the following: a shape of the sensing target, 2D/3D environment reconstruction, a spatial position, an orientation, a displacement, a moving speed, an acceleration, and ranging, speed measurement, angle measurement, or imaging of the target object sensed by the radar type, whether a person or an object exists, and an action, a gesture, a respiratory rate, a heart rate, sleep quality, and the like of the sensing target.

In an implementation of this application, after the first communication device receives the first sensing measurement quantity that is of the first sensing signal and that is transmitted by the third communication device, the method further includes:
the first communication device obtains the sensing result based on the first sensing measurement quantity; or
the first communication device transmits the first sensing measurement quantity to the second communication device.

In an implementation of this application, that the first communication device obtains the sensing result based on the first sensing measurement quantity includes:
the first communication device converts the first sensing measurement quantity into the sensing result based on at least one of the first requirement, a second requirement, and a third fuzzification mode;
   or
the first communication device converts the first sensing measurement quantity into an initial sensing result, and the first communication device converts the initial sensing result into the sensing result based on at least one of the first requirement, a second requirement, and a fourth fuzzification mode, where
the third fuzzification mode is used for fuzzification processing in the process of converting the first sensing measurement quantity into the sensing result; and the fourth fuzzification mode is used for fuzzification processing in the process of converting the initial sensing result into the sensing result.

In an implementation of this application, after the first communication device receives the sensing result that is of the first sensing measurement quantity and that is transmitted by the third communication device, the method further includes:
the first communication device transmits the sensing result to the second communication device.

In an implementation of this application, the method further includes:
the first communication device receives, from the fourth communication device, a first sensing measurement quantity of the first sensing signal; and
the first communication device transmits the first sensing measurement quantity to the second communication device.

In this embodiment of this application, the first communication device may determine the parameter information of the sensing signal and/or the resource information of the sensing signal based on the first requirement, or the first communication device may receive, from the second communication device, the parameter information of the sensing signal and/or the resource information of the sensing signal that are/is determined by the second communication device based on the first requirement, where the first communication device is used as a sensing signal transmit end, and the first requirement includes at least one of the fuzzification requirement related to wireless sensing, the sensing privacy requirement, and the sensing error requirement. This is equivalent to performing fuzzification processing on the parameter information of the sensing signal and/or the resource information of the sensing signal at the sensing signal transmit end. Therefore, privacy of the sensing measurement quantity is improved, further, privacy of the sensing result is improved, and a risk of sensing result leakage is reduced, while the sensing result can meet the sensing requirement.

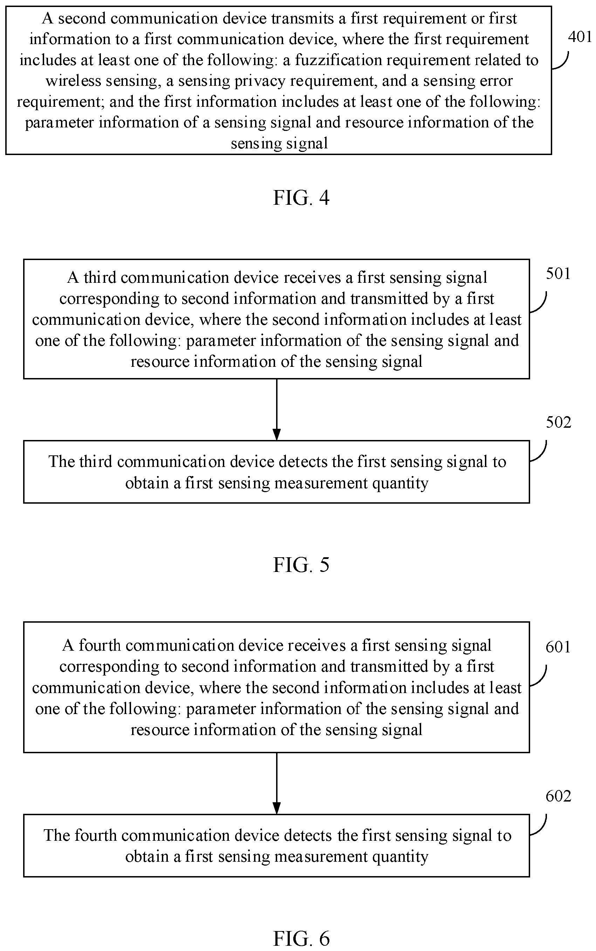

Referring to FIG. 4, an embodiment of this application provides a sensing signal processing method, applied to a second communication device. A specific step includes step 401.

Step 401: The second communication device transmits a first requirement or first information to a first communication device, where
the first requirement includes at least one of the following: a fuzzification requirement related to wireless sensing, a sensing privacy requirement, and a sensing error requirement; and the first information includes at least one of the following: parameter information of a sensing signal and resource information of the sensing signal.

It should be noted that for the descriptions of the second communication device, the first communication device, a third communication device, and a fourth communication device in the embodiment shown in FIG. 4, reference may be made to the descriptions in Embodiment 1 and Embodiment 2.

In an implementation of this application, before the second communication device transmits the first information to the first communication device, the method further includes:
the second communication device determines the first information based on the first requirement.

In an implementation of this application, the method further includes:
the second communication device receives the first requirement from a core network device;
   or
the second communication device receives the first requirement from an application, a radio access network device, or a terminal;
   or
the second communication device receives the first requirement from a network management system of an operator.

In an implementation of this application, the method further includes:
the second communication device transmits a second requirement to the first communication device, where the second requirement includes a sensing requirement.

In an implementation of this application, the method further includes:
the second communication device receives the second requirement from a core network device;
   or
the second communication device receives the second requirement from an application, a radio access network device, and/or a terminal;
   or
the second communication device receives the second requirement from a network management system of an operator.

In an implementation of this application, the method further includes:
the second communication device transmits, to the first communication device, a sensing measurement quantity that needs to be fed back by the third communication device.

In an implementation of this application, the method further includes:
the second communication device transmits a second fuzzification mode to the first communication device, where
the second fuzzification mode is a fuzzification mode for some or all sensing measurement quantities.

In an implementation of this application, before the second communication device transmits the second fuzzification mode to the first communication device, the method further includes:
the second communication device determines the second fuzzification mode based on the first requirement;
   or
the second communication device determines the second fuzzification mode based on the first requirement and a second requirement;
   or
the second communication device receives the second fuzzification mode.

In an implementation of this application, that the second communication device receives the second fuzzification mode includes:
the second communication device receives the second fuzzification mode from a core network device;
   or
the second communication device receives the second fuzzification mode from an application, a radio access network device, or a terminal;
   or
the second communication device receives the second fuzzification mode from a network management system of an operator.

In an implementation of this application, the method further includes:
the second communication device receives a first sensing measurement quantity transmitted by the third communication device.

In an implementation of this application, the method further includes:
the second communication device obtains a sensing result based on the first sensing measurement quantity.

In an implementation of this application, the method further includes:
the second communication device receives a sensing result transmitted by the first communication device.

In an implementation of this application, that the second communication device obtains a sensing result based on the first sensing measurement quantity includes:
the second communication device converts the first sensing measurement quantity into the sensing result based on at least one of the first requirement, a second requirement, and a third fuzzification mode;
   or
the second communication device converts the first sensing measurement quantity into an initial sensing result, and the second communication device converts the initial sensing result into the sensing result based on at least one of the first requirement, a second requirement, and a fourth fuzzification mode, where
the third fuzzification mode is used for fuzzification processing in the process of converting the first sensing measurement quantity into the sensing result; and the fourth fuzzification mode is used for fuzzification processing in the process of converting the initial sensing result into the sensing result.

In an implementation of this application, the method further includes:
the second communication device transmits the sensing result to a sensing requirement originator, where the sensing requirement originator is configured to perform fuzzification processing on the sensing result at an application layer to obtain a fuzzified sensing result.

In an implementation of this application, the method further includes:
the second communication device transmits a sensing measurement quantity that needs to be fed back by the fourth communication device and/or measurement configuration information to the fourth communication device, where the fourth communication device is a terminal or a base station.

In an implementation of this application, the fourth communication device is the terminal, and before the second communication device transmits the sensing measurement quantity that needs to be fed back by the fourth communication device and/or the measurement configuration information to the fourth communication device, the method further includes:
the second communication device receives, from the third communication device, the sensing measurement quantity that needs to be fed back by the fourth communication device and/or the measurement configuration information;
   or
the second communication device determines the sensing measurement quantity that needs to be fed back by the fourth communication device and/or the measurement configuration information.

In an implementation of this application, the method further includes:
the second communication device determines a first fuzzification mode based on the first requirement, or based on the first requirement and a second requirement, and transmits the first fuzzification mode to the fourth communication device;
   or
the second communication device receives a second fuzzification mode from the third communication device, and transmits the second fuzzification mode to the fourth communication device, where
the first fuzzification mode and the second fuzzification mode are fuzzification modes for some or all sensing measurement quantities.

In an implementation of this application, the method further includes:
the second communication device receives a first sensing measurement quantity from the fourth communication device; and
the second communication device transmits the first sensing measurement quantity to the third communication device.

In an implementation of this application, the method further includes:
the second communication device receives, from the fourth communication device, a sensing result of a first sensing measurement quantity; and
the second communication device transmits the sensing result to the third communication device.

In an implementation of this application, after the second communication device receives the first sensing measurement quantity from the fourth communication device, the method further includes:
the second communication device obtains a sensing result based on the first sensing measurement quantity.

In an implementation of this application, that the second communication device obtains a sensing result based on the first sensing measurement quantity includes:
the second communication device converts the first sensing measurement quantity into the sensing result based on at least one of the first requirement, a second requirement, and a third fuzzification mode;
   or
the second communication device converts the first sensing measurement quantity into an initial sensing result, and the second communication device converts the initial sensing result into the sensing result based on at least one of the first requirement, a second requirement, and a fourth fuzzification mode, where
the third fuzzification mode is used for fuzzification processing in the process of converting the first sensing measurement quantity into the sensing result; and the fourth fuzzification mode is used for fuzzification processing in the process of converting the initial sensing result into the sensing result.

In an implementation of this application, the method further includes:
the second communication device transmits the sensing result to the third communication device.

In this embodiment of this application, the second communication device may transmit the first requirement to the first communication device; and the first communication device may determine the parameter information of the sensing signal and/or the resource information of the sensing signal based on the first requirement, or the second communication device may directly transmit, to the first communication device, the parameter information of the sensing signal and/or the resource information of the sensing signal that are/is determined by the second communication device based on the first requirement, where the first communication device is used as a sensing signal transmit end, and the first requirement includes at least one of the fuzzification requirement related to wireless sensing, the sensing privacy requirement, and the sensing error requirement. This is equivalent to performing fuzzification processing on the parameter information of the sensing signal and/or the resource information of the sensing signal at the sensing signal transmit end. Therefore, privacy of the sensing measurement quantity is improved, further, privacy of the sensing result is improved, and a risk of sensing result leakage is reduced, while the sensing result can meet the sensing requirement.

Referring to FIG. 5, an embodiment of this application provides a sensing signal processing method, applied to a sensing signal receiving device, where the sensing signal receiving device includes a third communication device. Specific steps include step 501 and step 502.

Step 501: The third communication device receives a first sensing signal corresponding to second information and transmitted by a first communication device, where the second information includes at least one of the following: parameter information of the sensing signal and resource information of the sensing signal.

Step 502: The third communication device detects the first sensing signal to obtain a first sensing measurement quantity.

It should be noted that for the descriptions of the third communication device, the first communication device, and a second communication device in the embodiment shown in FIG. 5, reference may be made to the descriptions in Embodiment 1 and Embodiment 2.

In an implementation of this application, the method further includes:
the third communication device transmits the first sensing measurement quantity to the first communication device and/or the second communication device.

In an implementation of this application, the method further includes:
the third communication device obtains a sensing result based on the first sensing measurement quantity; and
the third communication device transmits the sensing result to the first communication device and/or the second communication device.

In an implementation of this application, the method further includes:
the third communication device receives a second requirement transmitted by the first communication device, where the second requirement includes a sensing requirement.

In an implementation of this application, the method further includes:
the third communication device receives a sensing measurement quantity that is transmitted by the first communication device and needs to be fed back by the third communication device.

In an implementation of this application, the method further includes:
the third communication device receives the second information transmitted by the first communication device, where the second information includes at least one of the following: the parameter information of the sensing signal and the resource information of the sensing signal.

In an implementation of this application, the method further includes:
the third communication device receives at least one of a first fuzzification mode and a second fuzzification mode transmitted by the first communication device.

In an implementation of this application, the method further includes:
the third communication device determines at least one of the sensing measurement quantity, a first fuzzification mode, and a second fuzzification mode.

In this embodiment of this application, the first information is the parameter information of the sensing signal and/or the resource information of the sensing signal that are/is determined by the first communication device based on the first requirement, or the first information is received by the first communication device from the second communication device and is the parameter information of the sensing signal and/or the resource information of the sensing signal that are/is determined by the second communication device based on the first requirement, where the first communication device is used as a sensing signal transmit end, and the first requirement includes at least one of the fuzzification requirement related to wireless sensing, the sensing privacy requirement, and the sensing error requirement. This is equivalent to performing fuzzification processing on the parameter information of the sensing signal and/or the resource information of the sensing signal at the sensing signal transmit end. Therefore, privacy of the first sensing measurement quantity obtained by the third communication device is improved, further, privacy of the sensing result obtained based on the first sensing measurement quantity is improved, and a risk of sensing result leakage is reduced.

Referring to FIG. 6, an embodiment of this application provides a sensing signal processing method, applied to a sensing signal receiving device, where the sensing signal receiving device includes a fourth communication device. Specific steps include step 601 and step 602.

Step 601: The fourth communication device receives a first sensing signal corresponding to second information and transmitted by a first communication device, where the second information includes at least one of the following: parameter information of the sensing signal and resource information of the sensing signal.

Step 602: The fourth communication device detects the first sensing signal to obtain a first sensing measurement quantity.

It should be noted that for the descriptions of the fourth communication device, the first communication device, a second communication device, and a third communication device in the embodiment shown in FIG. 6, reference may be made to the descriptions in Embodiment 1 and Embodiment 2.

In an implementation of this application, the method further includes:
the fourth communication device transmits the first sensing measurement quantity to the second communication device or the third communication device.

In an implementation of this application, the method further includes:
the fourth communication device obtains a sensing result based on the first sensing measurement quantity; and
the fourth communication device transmits the sensing result to the second communication device or the third communication device.

In an implementation of this application, the method further includes:
the fourth communication device receives, from the second communication device, a sensing measurement quantity that needs to be fed back by the fourth communication device and/or measurement configuration information;
   or
the fourth communication device receives, from the third communication device, a sensing measurement quantity that needs to be fed back by the fourth communication device and/or measurement configuration information.

In an implementation of this application, the method further includes:
the fourth communication device receives at least one of a first fuzzification mode, a second fuzzification mode, and a third fuzzification mode from the second communication device.

In this embodiment of this application, the first information is the parameter information of the sensing signal and/or the resource information of the sensing signal that are/is determined by the first communication device based on the first requirement, or the first information is received by the first communication device from the second communication device and is the parameter information of the sensing signal and/or the resource information of the sensing signal that are/is determined by the second communication device based on the first requirement, where the first communication device is used as a sensing signal transmit end, and the first requirement includes at least one of the fuzzification requirement related to wireless sensing, the sensing privacy requirement, and the sensing error requirement. This is equivalent to performing fuzzification processing on the parameter information of the sensing signal and/or the resource information of the sensing signal at the sensing signal transmit end. Therefore, privacy of the first sensing measurement quantity obtained by the fourth communication device is improved, further, privacy of the sensing result obtained based on the first sensing measurement quantity is improved, and a risk of sensing result leakage is reduced.

Implementations of this application are hereinafter described with reference to Embodiment 1 to Embodiment 2.

### Embodiment 1

Embodiment 1 corresponds to the following three sensing link directions, and a common point is that a sensing signal transmitting device is a base station. FIG. 1 is used as an example.
(1) A sensing signal transmitting device is base station 1, and a sensing signal receiving device is UE 1.
(2) A sensing signal transmitting device is base station 1, and a sensing signal receiving device is base station 2.
(3) A sensing signal transmitting device is base station 1, and a sensing signal receiving device is base station 1 (that is, echo reception).

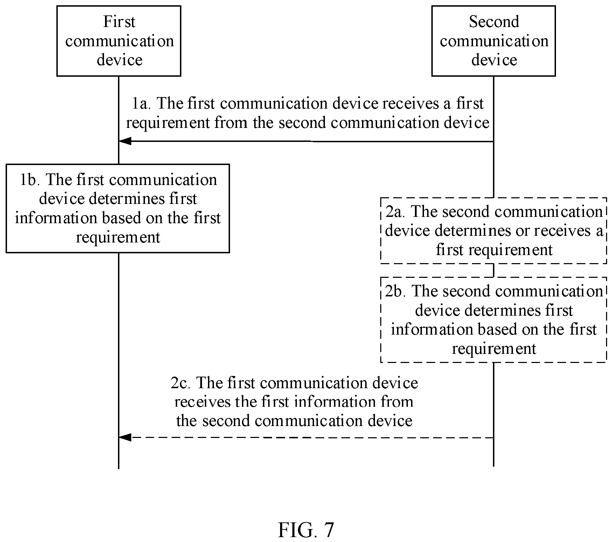

Various implementations in Embodiment 1 are hereinafter described with reference to FIG. 7 to FIG. 13.

Referring to FIG. 7, in an implementation shown in FIG. 7, specific steps include step 1a and step 1b.

Step 1a: A first communication device receives a first requirement from a second communication device.

Step 1b: The first communication device determines first information based on the first requirement.

Referring to FIG. 7, in another implementation shown in FIG. 7, specific steps include step 2a, step 2b, and step 2c.

Step 2a: A second communication device determines or receives a first requirement.

A method for determining or receiving the first requirement by the second communication device includes at least one of the following:
(a) The first requirement comes from an external application. For example, the first requirement is transmitted to a NEF through an AF, and then transmitted by the NEF to an AMF, and the AMF selects the second communication device (such as a sensing MF) and transmits the first requirement to the second communication device.
(b) The first requirement comes from the external application. For example, the AF transmits the first requirement to the NEF, and the NEF selects the second communication device (such as the sensing MF) and transmits the first requirement to the second communication device.
(c) The first requirement may alternatively come from a base station and/or UE. In this case, the first requirement is transmitted by the base station and/or the UE to the AMF, and the AMF selects the second communication device (such as the sensing MF) and transmits the first requirement to the second communication device.
(d) The first requirement may alternatively come from a supervision authority. In this case, the supervision authority transmits the first requirement to the AMF, and the AMF selects the second communication device (such as the sensing MF) and transmits the first requirement to the second communication device; or the supervision authority directly transmits the first requirement to the second communication device; or the supervision authority transmits the first requirement to a network management system of an operator, and then the network management system transmits the first requirement to the second communication device or transmits the first requirement to the second communication device through the AMF.
(e) The AF or the base station or the UE directly transmits the first requirement to the second communication device (without forwarding by the AMF).

Step 2b: The second communication device determines first information based on the first requirement.

Step 2c: A first communication device receives the first information from the second communication device.

It should be noted that step 2a and step 2b are optional steps before step 2c.

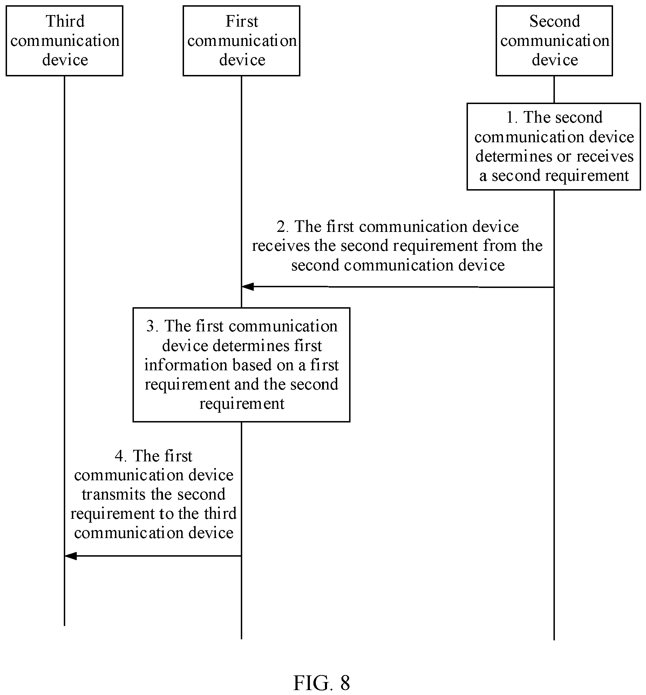

Referring to FIG. 8, specific steps include:
Step 1: A second communication device determines or receives a second requirement, where the second requirement includes a sensing requirement.

It may be understood that a manner in which the second communication device determines or receives the second requirement is similar to a manner in which the second communication device determines or receives the first requirement shown in FIG. 7. Details are not described herein again.

Step 2: A first communication device receives the second requirement from the second communication device.

Step 3: The first communication device determines first information based on a first requirement and the second requirement.

It may be understood that the first communication device may receive the first requirement according to step 1a shown in FIG. 7.

Step 4: The first communication device transmits the second requirement to a third communication device.

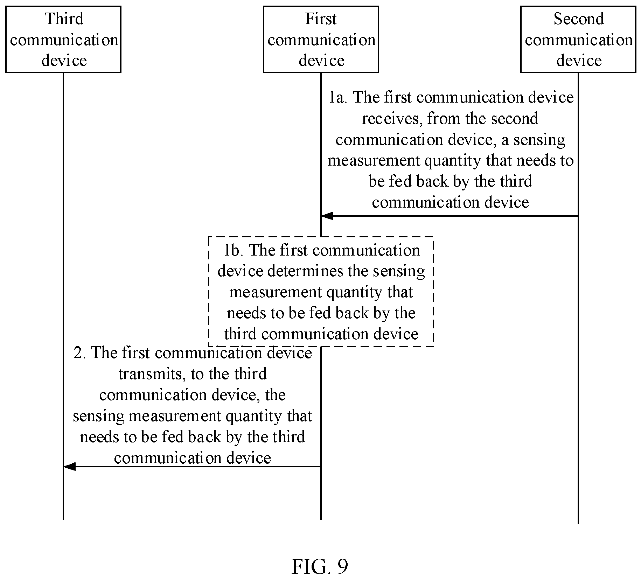

Referring to FIG. 9, specific steps include step 1a or step 1b, and step 2.

Step 1a: A first communication device receives, from a second communication device, a sensing measurement quantity that needs to be fed back by a third communication device.

Step 1b: The first communication device determines the sensing measurement quantity that needs to be fed back by the third communication device.

It may be understood that the first communication device may perform at least one of step 1a and step 1b.

Step 2: The first communication device transmits, to the third communication device, the sensing measurement quantity that needs to be fed back by the third communication device.

It may be understood that before step 2, the first communication device may receive, from the second communication device, the sensing measurement quantity that needs to be fed back by the third communication device; or the first communication device itself determines the sensing measurement quantity that needs to be fed back by the third communication device. For example, the first communication device determines, based on a second requirement, the sensing measurement quantity that needs to be fed back by the third communication device.

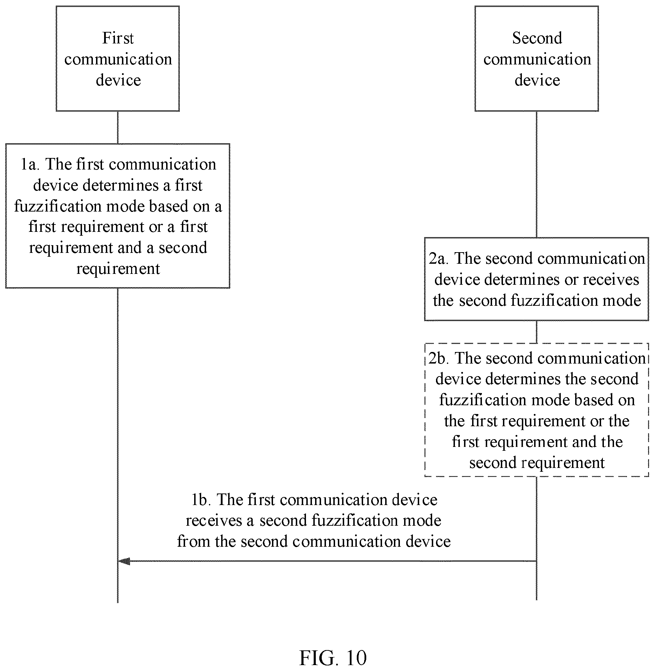

Referring to FIG. 10, a first communication device may perform at least one of step 1a and step 1b.
Step 1a: The first communication device determines a first fuzzification mode based on a first requirement, or based on a first requirement and a second requirement.
Step 1b: The first communication device receives a second fuzzification mode from a second communication device, where the first fuzzification mode and the second fuzzification mode are fuzzification modes for some or all sensing measurement quantities.

Optionally, step 2a or step 2b may be included before step 1b.

Step 2a: The second communication device determines or receives the second fuzzification mode.

It may be understood that a manner in which the second communication device determines or receives the second fuzzification mode is similar to a manner in which the second communication device determines or receives the first requirement shown in FIG. 7. Details are not described herein again.

Step 2b: The second communication device determines the second fuzzification mode based on the first requirement or the first requirement and the second requirement.

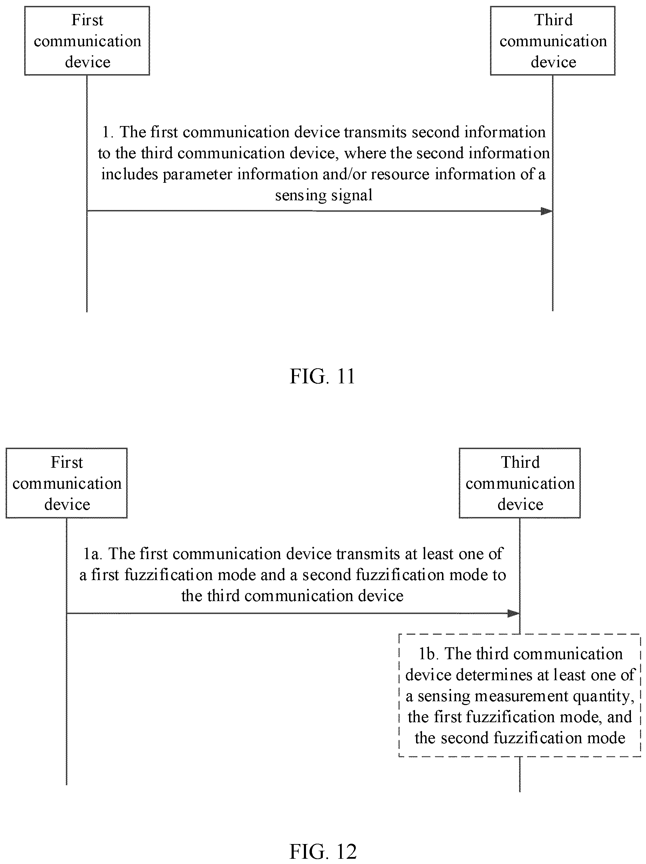

Referring to FIG. 11, a specific step includes:
Step 1: A first communication device transmits second information to a third communication device, where the second information includes parameter information and/or resource information of a sensing signal.

It may be understood that the second information may be the same as or different from the first information in the embodiment shown in FIG. 7.

Referring to FIG. 12, specific steps include step 1a or step 1b.
Step 1a: A first communication device transmits at least one of a first fuzzification mode and a second fuzzification mode to a third communication device.
Step 1b: The third communication device determines at least one of a sensing measurement quantity, the first fuzzification mode, and the second fuzzification mode.

For example, the third communication device determines at least one of the sensing measurement quantity, the first fuzzification mode, and the second fuzzification mode based on at least one of a first requirement and a second requirement.

The first fuzzification mode and the second fuzzification mode may also be included in the first requirement.

Referring to FIG. 13, specific steps include:
Step 1: A first communication device transmits feedback configuration information of a sensing measurement quantity to a third communication device.
Step 2: The first communication device transmits, to the third communication device, a first sensing signal corresponding to second information.
Step 3: The third communication device detects the first sensing signal to obtain a first sensing measurement quantity.

Optionally, the third communication device performs fuzzification processing in a process of generating the first sensing measurement quantity. For example, based on at least one of a first requirement, a second requirement, a first fuzzification mode, and a second fuzzification mode, the third communication device performs fuzzification processing in the process of generating the first sensing measurement quantity, to obtain the first sensing measurement quantity.

Optionally, the third communication device performs fuzzification processing on an initial sensing measurement quantity to obtain the first sensing measurement quantity. For example, the third communication device performs fuzzification processing on the initial sensing measurement quantity based on at least one of the first requirement, the second requirement, the first fuzzification mode, and the second fuzzification mode, to obtain the first sensing measurement quantity.

Because the first sensing measurement quantity obtained by the third communication device based on the first sensing signal is fuzzified, privacy of the first sensing measurement quantity is improved.

Step 4a: The third communication device transmits the first sensing measurement quantity to the first communication device.

Step 4b: The third communication device transmits the first sensing measurement quantity to a second communication device.

Optionally, the third communication device transmits the first sensing measurement quantity to the first communication device or the second communication device based on the feedback configuration information of the sensing measurement quantity.

Optionally, the third communication device obtains a sensing result based on the first sensing measurement quantity, and transmits the sensing result to the first communication device or the second communication device.

If the third communication device is a base station, the third communication device transmits the first sensing measurement quantity or the sensing result to the second communication device.

Alternatively, if the third communication device is UE, the third communication device transmits the first sensing measurement quantity or the sensing result to the first communication device; and then the first communication device transmits the first sensing measurement quantity or the sensing result to the second communication device.

It may be understood that the third communication device transmits tag information corresponding to the first sensing measurement quantity (for example, a sensing signal tag corresponding to the sensing measurement quantity, a time tag of the sensing measurement quantity, a frequency tag, a tag of a base station or a TRP that transmits the sensing signal, a tag of an antenna port that transmits the sensing signal, and a tag of a receive antenna of the third communication device) to the first communication device or the second communication device.

Step 4c: The first communication device transmits the first sensing measurement quantity to the second communication device.

Step 4d: The first communication device obtains the sensing result based on the first sensing measurement quantity.

Step 4e: The second communication device obtains the sensing result based on the first sensing measurement quantity.

If the third communication device transmits the first sensing measurement quantity to the first communication device or the second communication device, a subsequent step is that the first communication device or the second communication device obtains the sensing result based on the first sensing measurement quantity.

Step 5: The third communication device obtains the sensing result based on the first sensing measurement quantity.

In step 4d, step 4e, and step 5, the first communication device or the second communication device or the third communication device converts the first sensing measurement quantity into the sensing result based on at least one of the first requirement, the second requirement, and a third fuzzification mode; or
the first communication device or the second communication device or the third communication device converts the first sensing measurement quantity into an initial sensing result, and then converts the initial sensing result into the sensing result based on at least one of the first requirement, the second requirement, and a fourth fuzzification mode, where
the third fuzzification mode is used for fuzzification processing in the process of converting the first sensing measurement quantity into the sensing result; and the fourth fuzzification mode is used for fuzzification processing in the process of converting the initial sensing result into the sensing result.

Step 6a: The third communication device transmits the sensing result to the first communication device.

Step 6b: The third communication device transmits the sensing result to the second communication device.

Step 6c: The first communication device transmits the sensing result to the second communication device.

Step 7: The second communication device transmits the sensing result to a sensing requirement originator.

In step 6c and step 7, after the first communication device obtains the sensing result, the first communication device transmits the sensing result to the second communication device, and the second communication device transmits the sensing result to the sensing requirement originator (such as an external application, a base station, and UE); or after the second communication device obtains the sensing result, the second communication device transmits the sensing result to the sensing requirement originator.

Step 8: The sensing requirement originator performs fuzzification processing on the sensing result at an application layer to obtain a fuzzified sensing result.

In this embodiment, the first communication device is a sensing signal transmitting device, such as a base station. The second communication device is a sensing network function or a sensing network element (Sensing MF), which may be located on a RAN side or a core network side, and refers to a network node that is in a core network and/or a RAN and responsible for at least one of functions such as sensing request processing, sensing resource scheduling, sensing information interaction, and sensing data processing. The network node may be an AMF or an LMF upgrade based on a related technology in a 5G network, or may be other network nodes or newly defined network nodes. The third communication device is a sensing signal receiving device.

It should be noted that the steps of each procedure in Embodiment 1 may be performed in the order shown in FIG. 7 to FIG. 13. It may be understood that the steps of each procedure in Embodiment 1 may alternatively not be performed in the order shown in FIG. 7 to FIG. 13.

### Embodiment 2

Embodiment 2 corresponds to the following three sensing link directions, and a common point is that a sensing signal transmitting device is UE. FIG. 1 is used as an example.
(1) A sensing signal transmitting device is UE, and a sensing signal receiving device is a base station.
(2) A sensing signal transmitting device is UE 1, and a sensing signal receiving device is UE 2.
(3) A sensing signal transmitting device is UE 1, and a sensing signal receiving device is UE 1 (that is, echo reception).

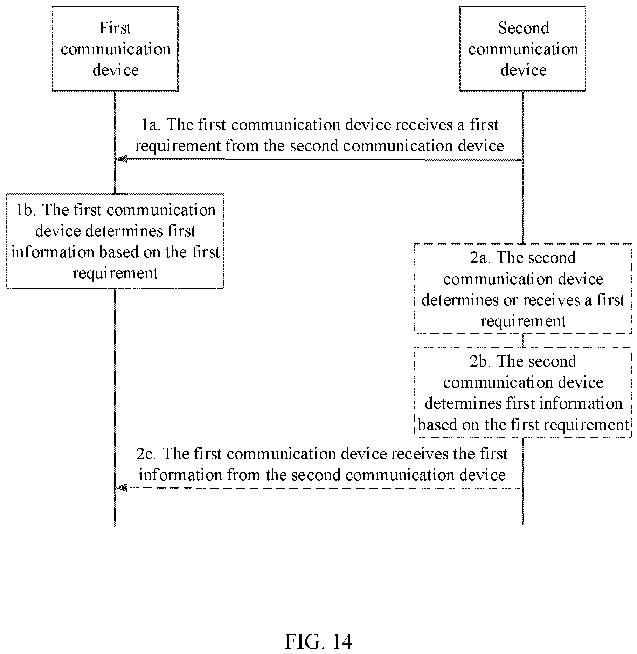

Various implementations in Embodiment 2 are hereinafter described with reference to FIG. 14 to FIG. 19.

Referring to FIG. 14, specific steps include:
Referring to FIG. 14, in an implementation shown in FIG. 14, specific steps include step 1a and step 1b.

Step 1a: A first communication device receives a first requirement from a second communication device.

Step 1b: The first communication device determines first information based on the first requirement.

Optionally, the first information includes parameter information and/or resource information of a sensing signal.

Referring to FIG. 14, in another implementation shown in FIG. 14, specific steps include step 2a, step 2b, and step 2c.

Step 2a: A second communication device determines or receives a first requirement.

Optionally, a method for determining or receiving the first requirement by the second communication device includes at least one of the following:
(a) The first requirement comes from an external application. For example, the first requirement is transmitted to a NEF through an AF, and then transmitted by the NEF to an AMF, and the AMF selects a sensing MF and transmits the first requirement to the sensing MF; and the sensing MF transmits the first requirement to the second communication device.
(b) The first requirement comes from the external application. The AF transmits the first requirement to the NEF, and the NEF selects the sensing MF and transmits the first requirement to the sensing MF.
(c) The first requirement may alternatively come from a base station and/or UE. In this case, the first requirement is transmitted by the base station and/or the UE to the AMF, and the AMF selects the sensing MF and transmits the first requirement to the sensing MF; and the sensing MF transmits the first requirement to the second communication device.
(d) The first requirement may alternatively come from a supervision authority. In this case, the supervision authority transmits the first requirement to the AMF, and the AMF selects the sensing MF and transmits the first requirement to the sensing MF; or the supervision authority directly transmits the first requirement to the sensing MF; or the supervision authority transmits the first requirement to a network management system of an operator, and then the network management system transmits the first requirement to the sensing MF or transmits the first requirement to the sensing MF through the AMF; and the sensing MF transmits the first requirement to the second communication device.
(e) The AF or the base station or the UE directly transmits the first requirement to the sensing MF (without forwarding by another device (such as the AMF)), and the sensing MF transmits the first requirement to the second communication device.

Step 2b: The second communication device determines first information based on the first requirement.

Step 2c: A first communication device receives the first information from the second communication device.

It should be noted that step 2a and step 2b are optional steps before step 2c.

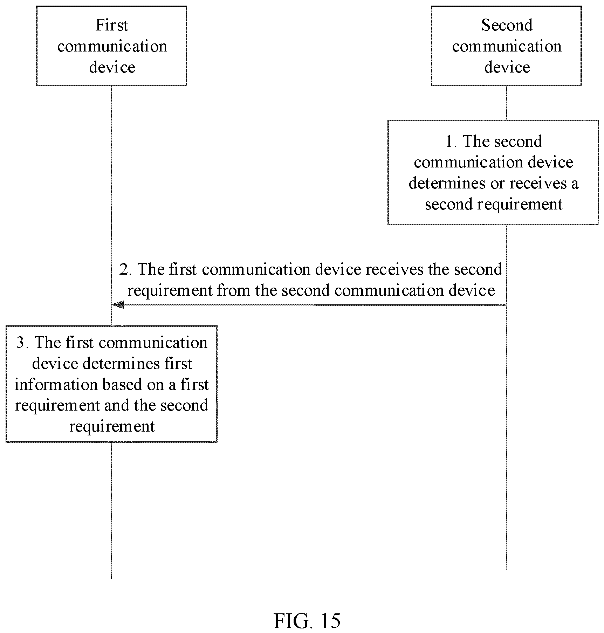

Referring to FIG. 15, specific steps include:
Step 1: A second communication device determines or receives a second requirement.
Step 2: A first communication device receives the second requirement from the second communication device.

It may be understood that for a manner in which the first communication device receives the second requirement from the second communication device, reference may be made to a manner in which the second communication device determines or receives the first requirement shown in FIG. 14.

Step 3: The first communication device determines first information based on a first requirement and the second requirement.

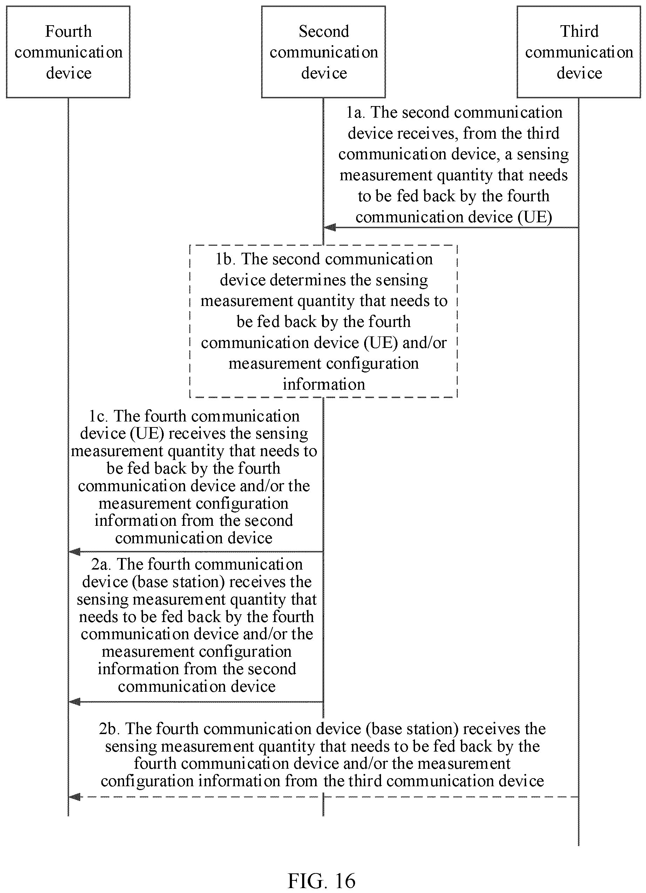

Referring to FIG. 16, specific steps include step 1a or step 1b, and step 1c, or a specific step includes step 2a or step 2b.

Step 1a: A second communication device receives, from a third communication device, a sensing measurement quantity that needs to be fed back by a fourth communication device (UE).

Step 1b: The second communication device determines the sensing measurement quantity that needs to be fed back by the fourth communication device (UE) and/or measurement configuration information.

For example, the second communication device determines, based on a second requirement, the sensing measurement quantity that needs to be fed back by the fourth communication device and/or the measurement configuration information.

Step 1c: The fourth communication device (UE) receives, from the second communication device (or another device), the sensing measurement quantity that needs to be fed back by the fourth communication device (UE) and/or the measurement configuration information.

It should be noted that before step 1c, the second communication device may perform at least one of step 1a and step 1b.

Step 2a: The fourth communication device (base station) receives, from the second communication device, the sensing measurement quantity that needs to be fed back by the fourth communication device and/or the measurement configuration information.

Step 2b: The fourth communication device (base station) receives, from the third communication device, the sensing measurement quantity that needs to be fed back by the fourth communication device and/or the measurement configuration information.

It should be noted that the fourth communication device may perform at least one of step 2a and step 2b.

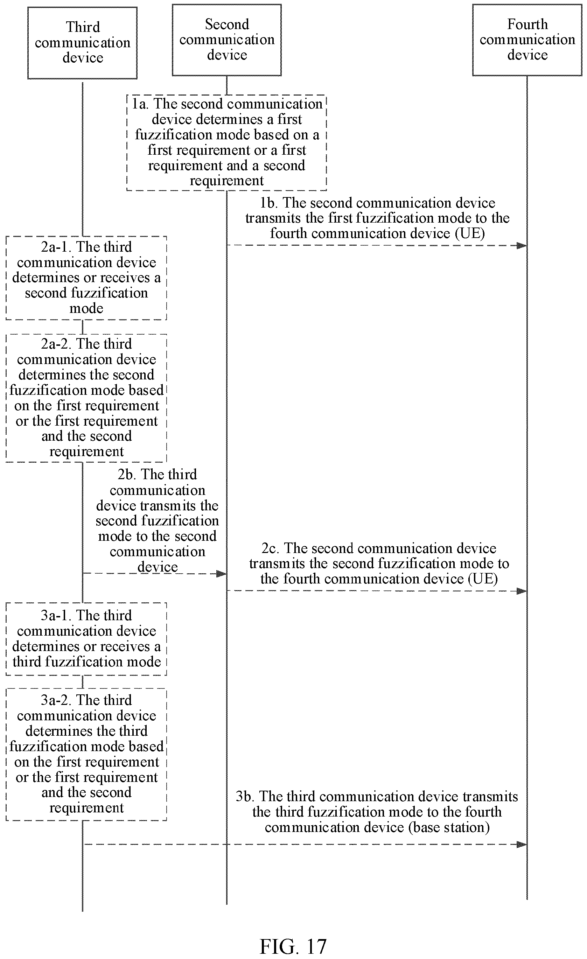

Referring to FIG. 17, specific steps include step 1a, step 1b, step 2b, and step 2c, or a specific step includes step 3b.

Step 1a: A second communication device determines a first fuzzification mode based on a first requirement or a first requirement and a second requirement.

Step 1b: The second communication device transmits the first fuzzification mode to a fourth communication device (UE).

Step 2a-1: A third communication device determines or receives a second fuzzification mode.

It may be understood that for a manner in which the third communication device determines or receives the second fuzzification mode, reference may be made to a manner in which the second communication device determines or receives the first requirement shown in FIG. 14.

Step 2a-2: The third communication device determines the second fuzzification mode based on the first requirement or the first requirement and the second requirement.

Step 2b: The third communication device transmits the second fuzzification mode to the second communication device.

Step 2a-1 or step 2a-2 is performed before step 2b.

Step 2c: The second communication device transmits the second fuzzification mode to the fourth communication device (UE).

Step 3a-1: The third communication device determines or receives a third fuzzification mode.

It may be understood that for a manner in which the third communication device determines or receives the third fuzzification mode, reference may be made to a manner in which the second communication device determines or receives the first requirement shown in FIG. 14.

Step 3a-2: The third communication device determines the third fuzzification mode based on the first requirement or the first requirement and the second requirement.

Step 3b: The third communication device transmits the third fuzzification mode to the fourth communication device (base station).

Step 3a-1 or step 3a-2 is performed before step 3b.

Optionally, the first fuzzification mode, the second fuzzification mode, the third fuzzification mode, and a fourth fuzzification mode may be included in the first requirement.

In this embodiment, a first communication device may be a sensing signal transmitting device, such as UE. The second communication device may be an access base station or a serving base station for the first communication device, such as an access base station for the UE. The third communication device may be a sensing network function or a sensing network element (Sensing MF), which may be located on a RAN side or a core network side, and refers to a network node that is in a core network and/or a RAN and responsible for at least one of functions such as sensing request processing, sensing resource scheduling, sensing information interaction, and sensing data processing. The network node may be an AMF or an LMF upgrade based on a related technology in a 5G network, or may be other network nodes or newly defined network nodes. A core network device is, for example, a sensing network function or a sensing network element (Sensing MF). The fourth communication device may be a sensing signal receiving device, such as a base station or UE.

It should be noted that in a case that the second communication device is a base station and the fourth communication device is a base station, the second communication device and the fourth communication device may be a same base station or different base stations.

If the first communication device and the fourth communication device are the same device, that is, if the sensing link is the foregoing third type (echo reception), a signaling interaction step between the first communication device and the fourth communication device in Embodiment 2 may be omitted, because the same device does not require signaling interaction.

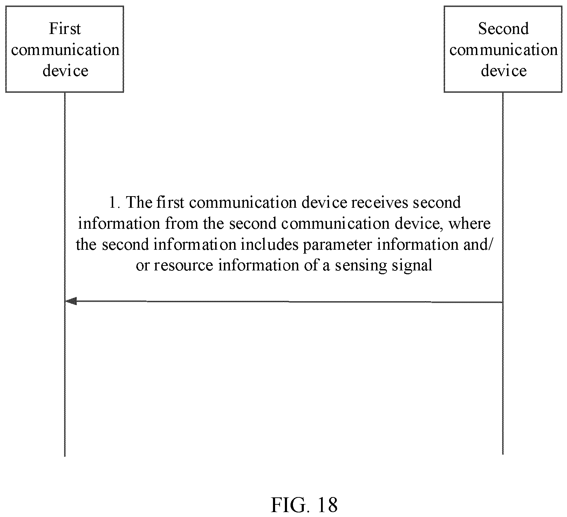

Referring to FIG. 18, a specific step includes:
Step 1: A first communication device receives second information from a second communication device, where the second information includes parameter information and/or resource information of a sensing signal.

Referring to FIG. 19, specific steps include:
Step 1: A first communication device transmits feedback configuration information of a sensing measurement quantity to a fourth communication device.
Step 2: The first communication device transmits, to the fourth communication device, a sensing signal corresponding to first information.
Step 3: The fourth communication device detects a first sensing signal to obtain a first sensing measurement quantity.

Optionally, the fourth communication device performs fuzzification processing in a process of generating the first sensing measurement quantity. For example, based on at least one of a first requirement, a second requirement, a first fuzzification mode, and a second fuzzification mode, the fourth communication device performs fuzzification processing in the process of generating the first sensing measurement quantity, to obtain the first sensing measurement quantity.

Optionally, the fourth communication device performs fuzzification processing on an initial sensing measurement quantity to obtain the first sensing measurement quantity. For example, the fourth communication device performs fuzzification processing on the initial sensing measurement quantity based on at least one of the first requirement, the second requirement, the first fuzzification mode, and the second fuzzification mode, to obtain the first sensing measurement quantity.

Step 4a-1: If the fourth communication device is UE, the fourth communication device transmits the first sensing measurement quantity to a second communication device.

To be specific, if the fourth communication device is the UE, the fourth communication device transmits the first sensing measurement quantity to the second communication device based on the feedback configuration information of the sensing measurement quantity (or transmits the first sensing measurement quantity to the second communication device through the first communication device, which is equivalent to a sidelink mode), and then the second communication device transmits the first sensing measurement quantity to a third communication device (that is, step 4a-1 to step 4a-3).

Alternatively, if the fourth communication device is the UE, the fourth communication device obtains a sensing result based on the first sensing measurement quantity, and transmits the sensing result to the second communication device (or transmits the sensing result to the second communication device through the first communication device); and then the second communication device transmits the sensing result to a third communication device (step 4b-1 to step 4b-3).

Step 4a-2: The second communication device obtains the sensing result based on the first sensing measurement quantity.

Step 4a-3: The second communication device transmits the first sensing measurement quantity to the third communication device.

Step 4a-4: The third communication device obtains the sensing result based on the first sensing measurement quantity.

Step 4b-1: The fourth communication device obtains the sensing result based on the first sensing measurement quantity.

Step 4b-2: If the fourth communication device is the UE, the fourth communication device transmits the sensing result to the second communication device.

Step 4b-3: The second communication device transmits the sensing result to the third communication device.

If the fourth communication device is a base station, the fourth communication device transmits the first sensing measurement quantity or the sensing result to the third communication device (step 4c); or the fourth communication device obtains the sensing result based on the first sensing measurement quantity, and transmits the sensing result to the third communication device (step 4d-1 and step 4d-2).

Step 4c-1: If the fourth communication device is the base station, the fourth communication device transmits the first sensing measurement quantity to the third communication device.

Step 4d-1: The fourth communication device obtains the sensing result based on the first sensing measurement quantity.

"The fourth communication device obtains the sensing result based on the first sensing measurement quantity" in step 4d-1 and "The second communication device or the third communication device obtains the sensing result based on the first sensing measurement quantity" in step 4a-2 or step 4a-4 include at least one of the following:
(1) the fourth communication device or the second communication device or the third communication device converts the first sensing measurement quantity into the sensing result based on at least one of the first requirement, the second requirement, and a third fuzzification mode; or
(2) the fourth communication device or the second communication device or the third communication device converts the first sensing measurement quantity into an initial sensing result, and then converts the initial sensing result into the sensing result based on at least one of the first requirement, the second requirement, and a fourth fuzzification mode, where
   the third fuzzification mode is used for fuzzification processing in the process of converting the first sensing measurement quantity into the sensing result; and the fourth fuzzification mode is used for fuzzification processing in the process of converting the initial sensing result into the sensing result.

Step 4d-2: If the fourth communication device is the base station, the fourth communication device transmits the sensing result to the third communication device.

The fourth communication device transmits tag information corresponding to the first sensing measurement quantity (for example, a sensing signal tag corresponding to the sensing measurement quantity, a time tag of the sensing measurement quantity, a frequency tag, a tag of a base station or a TRP that transmits the sensing signal, a tag of an antenna port that transmits the sensing signal, and a tag of a receive antenna of the third communication device) to the second communication device or the third communication device.

Step 5: The third communication device transmits the sensing result to a sensing requirement originator (such as an external application, a base station, or UE).

Step 6: The sensing requirement originator performs fuzzification processing on the sensing result at an application layer to obtain a fuzzified sensing result.

It should be noted that the steps of each procedure in Embodiment 2 may be performed in the order shown in FIG. 14 to FIG. 19. It may be understood that the steps of each procedure in Embodiment 2 may alternatively not be performed in the order shown in FIG. 14 to FIG. 19.

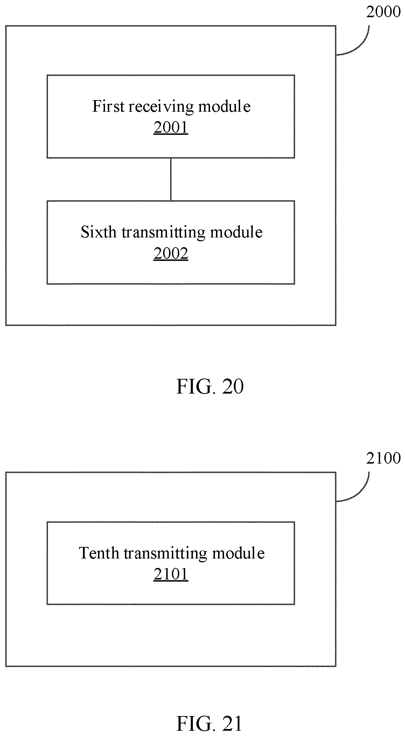

Referring to FIG. 20, an embodiment of this application provides a sensing signal processing apparatus, applied to a first communication device. The apparatus 2000 includes:
a first receiving module 2001, configured to receive a first requirement from a second communication device, and determine first information based on the first requirement; or receive first information from a second communication device; and
a sixth transmitting module 2002, configured to transmit, to a third communication device or a fourth communication device, a first sensing signal corresponding to second information, where
the first requirement includes at least one of the following: a fuzzification requirement related to wireless sensing, a sensing privacy requirement, and a sensing error requirement; the first information or the second information includes at least one of the following: parameter information of the sensing signal and resource information of the sensing signal; and the first information is the same as or different from the second information.

In an implementation of this application, the apparatus 2000 further includes:
a second receiving module, configured to receive a second requirement from the second communication device, where the second requirement includes a sensing requirement.

In an implementation of this application, the first receiving module 2001 is further configured to determine the first information based on the first requirement and the second requirement.

In an implementation of this application, the apparatus 2000 further includes:
a first transmitting module, configured to transmit the second requirement to the third communication device.

In an implementation of this application, the apparatus 2000 further includes:
a second transmitting module, configured to transmit a sensing measurement quantity that needs to be fed back by the third communication device and/or measurement configuration information to the third communication device.

In an implementation of this application, before the first communication device transmits the sensing measurement quantity that needs to be fed back by the third communication device and/or the measurement configuration information to the third communication device, the apparatus 2000 further includes:
a third receiving module, configured to receive, from the second communication device, the sensing measurement quantity that needs to be fed back by the third communication device and/or the measurement configuration information;
   or
a first processing module, configured to determine the sensing measurement quantity that needs to be fed back by the third communication device and/or the measurement configuration information.

In an implementation of this application, the apparatus 2000 further includes:
a second processing module, configured to determine a first fuzzification mode based on the first requirement or based on the first requirement and the second requirement, where
the first fuzzification mode is a fuzzification mode for some or all sensing measurement quantities.

In an implementation of this application, the apparatus 2000 further includes:
a fourth receiving module, configured to receive a second fuzzification mode from the second communication device, where
the second fuzzification mode is a fuzzification mode for some or all sensing measurement quantities.

In an implementation of this application, the apparatus 2000 further includes:
a third transmitting module, configured to transmit the second information to the third communication device.

In an implementation of this application, the apparatus 2000 further includes:
a fourth transmitting module, configured to transmit at least one of the first fuzzification mode and the second fuzzification mode to the third communication device.

In an implementation of this application, the apparatus 2000 further includes:
a fifth transmitting module, configured to transmit feedback configuration information of the sensing measurement quantity to the third communication device.

In an implementation of this application, the apparatus 2000 further includes:
a fifth receiving module, configured to: receive a first sensing measurement quantity that is of the first sensing signal and that is transmitted by the third communication device; or receive a sensing result that is of a first sensing measurement quantity and that is transmitted by the third communication device.

In an implementation of this application, after the first communication device receives the first sensing measurement quantity that is of the first sensing signal and that is transmitted by the third communication device, the apparatus 2000 further includes:
a third processing module, configured to: obtain the sensing result based on the first sensing measurement quantity; or transmit the first sensing measurement quantity to the second communication device.

In an implementation of this application, the third processing module is further configured to:
convert the first sensing measurement quantity into the sensing result based on at least one of the first requirement, a second requirement, and a third fuzzification mode;
   or
convert the first sensing measurement quantity into an initial sensing result, and convert the initial sensing result into the sensing result based on at least one of the first requirement, a second requirement, and a fourth fuzzification mode, where
the third fuzzification mode is used for fuzzification processing in the process of converting the first sensing measurement quantity into the sensing result; and the fourth fuzzification mode is used for fuzzification processing in the process of converting the initial sensing result into the sensing result.

In an implementation of this application, after the first communication device receives the sensing result that is of the first sensing measurement quantity and that is transmitted by the third communication device, the apparatus 2000 further includes:
a seventh transmitting module, configured to transmit the sensing result to the second communication device.

In an implementation of this application, the apparatus 2000 further includes:
a seventh receiving module, configured to receive, from the fourth communication device, a first sensing measurement quantity of the first sensing signal; and
a ninth transmitting module, configured to transmit the first sensing measurement quantity to the second communication device.

The apparatus provided in this embodiment of this application can implement each process implemented in the method embodiment in FIG. 3, with the same technical effect achieved. To avoid repetition, details are not described herein again.

Referring to FIG. 21, an embodiment of this application provides a sensing signal processing apparatus, applied to a second communication device. The apparatus 2100 includes:
a tenth transmitting module 2101, configured to transmit a first requirement or first information to a first communication device, where
the first requirement includes at least one of the following: a fuzzification requirement related to wireless sensing, a sensing privacy requirement, and a sensing error requirement; and the first information includes at least one of the following: parameter information of a sensing signal and resource information of the sensing signal.

In an implementation of this application, before the second communication device transmits the first information to the first communication device, the apparatus 2100 further includes:
a fourth processing module, configured to determine the first information based on the first requirement.

In an implementation of this application, the apparatus 2100 further includes:
an eighth receiving module, configured to: receive the first requirement from a core network device; or receive the first requirement from an application, a radio access network device, or a terminal; or receive the first requirement from a network management system of an operator.

In an implementation of this application, the apparatus 2100 further includes:
an eleventh transmitting module, configured to transmit a second requirement to the first communication device, where the second requirement includes a sensing requirement.

In an implementation of this application, the apparatus 2100 further includes:
a ninth receiving module, configured to: receive the second requirement from a core network device; or receive the second requirement from an application, a radio access network device, and/or a terminal; or receive the second requirement from a network management system of an operator.

In an implementation of this application, the apparatus 2100 further includes:
a twelfth transmitting module, configured to transmit, to the first communication device, a sensing measurement quantity that needs to be fed back by a third communication device.

In an implementation of this application, the apparatus 2100 further includes:
a thirteenth transmitting module, configured to transmit a second fuzzification mode to the first communication device, where
the second fuzzification mode is a fuzzification mode for some or all sensing measurement quantities.

In an implementation of this application, before the second communication device transmits the second fuzzification mode to the first communication device, the apparatus 2100 further includes:
a fifth processing module, configured to: determine the second fuzzification mode based on the first requirement; or determine the second fuzzification mode based on the first requirement and a second requirement; or
a tenth receiving module, configured to receive the second fuzzification mode.

In an implementation of this application, the tenth receiving module is further configured to: receive the second fuzzification mode from a core network device; receive the second fuzzification mode from an application, a radio access network device, or a terminal; or receive the second fuzzification mode from a network management system of an operator.

In an implementation of this application, the apparatus 2100 further includes:
an eleventh receiving module, configured to receive a first sensing measurement quantity transmitted by a third communication device.

In an implementation of this application, the apparatus 2100 further includes:
a sixth processing module, configured to obtain a sensing result based on the first sensing measurement quantity.

In an implementation of this application, the apparatus 2100 further includes:
a twelfth receiving module, configured to receive a sensing result transmitted by the first communication device.

In an implementation of this application, the sixth processing module is further configured to:
convert the first sensing measurement quantity into the sensing result based on at least one of the first requirement, a second requirement, and a third fuzzification mode;
   or
convert the first sensing measurement quantity into an initial sensing result, and convert, by the second communication device, the initial sensing result into the sensing result based on at least one of the first requirement, a second requirement, and a fourth fuzzification mode, where
the third fuzzification mode is used for fuzzification processing in the process of converting the first sensing measurement quantity into the sensing result; and the fourth fuzzification mode is used for fuzzification processing in the process of converting the initial sensing result into the sensing result.

In an implementation of this application, the apparatus 2100 further includes:
a fourteenth transmitting module, configured to transmit the sensing result to a sensing requirement originator, where the sensing requirement originator is configured to perform fuzzification processing on the sensing result at an application layer to obtain a fuzzified sensing result.

In an implementation of this application, the apparatus 2100 further includes:
a fifteenth transmitting module, configured to transmit a sensing measurement quantity that needs to be fed back by a fourth communication device and/or measurement configuration information to the fourth communication device, where the fourth communication device is a terminal or a base station.

In an implementation of this application, the fourth communication device is the terminal, and before the second communication device transmits the sensing measurement quantity that needs to be fed back by the fourth communication device and/or the measurement configuration information to the fourth communication device, the apparatus 2100 further includes:
a thirteenth receiving module, configured to receive, from a third communication device, the sensing measurement quantity that needs to be fed back by the fourth communication device and/or the measurement configuration information;
   or
a seventh processing module, configured to determine the sensing measurement quantity that needs to be fed back by the fourth communication device and/or the measurement configuration information.

In an implementation of this application, the apparatus 2100 further includes:
an eighth processing module, configured to: determine a first fuzzification mode based on the first requirement or the first requirement and a second requirement, and transmit the first fuzzification mode to a fourth communication device; or receive a second fuzzification mode from a third communication device, and transmit the second fuzzification mode to a fourth communication device, where
the first fuzzification mode and the second fuzzification mode are fuzzification modes for some or all sensing measurement quantities.

In an implementation of this application, the apparatus 2100 further includes:
a sixteenth transmitting module, configured to transmit third information to the first communication device, where the third information includes at least one of the following: the parameter information of the sensing signal and the resource information of the sensing signal.

In an implementation of this application, the apparatus 2100 further includes:
a fourteenth receiving module, configured to receive a first sensing measurement quantity from a fourth communication device; and
a seventeenth transmitting module, configured to transmit the first sensing measurement quantity to a third communication device.

In an implementation of this application, the apparatus 2100 further includes:
a fifteenth receiving module, configured to receive, from a fourth communication device, a sensing result of a first sensing measurement quantity; and
an eighteenth transmitting module, configured to transmit the sensing result to a third communication device.

In an implementation of this application, after the second communication device receives the first sensing measurement quantity from the fourth communication device, the apparatus 2100 further includes:
a ninth processing module, configured to obtain a sensing result based on the first sensing measurement quantity.

In an implementation of this application, the ninth processing module is further configured to:
convert the first sensing measurement quantity into the sensing result based on at least one of the first requirement, a second requirement, and a third fuzzification mode;
   or
convert the first sensing measurement quantity into an initial sensing result, and convert, by the second communication device, the initial sensing result into the sensing result based on at least one of the first requirement, a second requirement, and a fourth fuzzification mode, where
the third fuzzification mode is used for fuzzification processing in the process of converting the first sensing measurement quantity into the sensing result; and the fourth fuzzification mode is used for fuzzification processing in the process of converting the initial sensing result into the sensing result.

In an implementation of this application, the apparatus 2100 further includes:
a nineteenth transmitting module, configured to transmit the sensing result to the third communication device.

The apparatus provided in this embodiment of this application can implement each process implemented in the method embodiment in FIG. 4, with the same technical effect achieved. To avoid repetition, details are not described herein again.

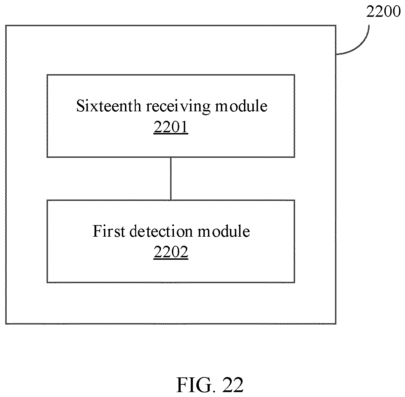

Referring to FIG. 22, an embodiment of this application provides a sensing signal processing apparatus, applied to a sensing signal receiving device, where the sensing signal receiving device includes a third communication device or a fourth communication device, and the apparatus 2200 includes:
a sixteenth receiving module 2201, configured to receive a first sensing signal corresponding to second information and transmitted by a first communication device, where the second information includes at least one of the following: parameter information of the sensing signal and resource information of the sensing signal; and
a first detection module 2202, configured to detect the first sensing signal to obtain a first sensing measurement quantity.

In an implementation of this application, the sensing signal receiving device includes the third communication device, and the apparatus 2200 further includes:
a twentieth transmitting module, configured to transmit the first sensing measurement quantity to the first communication device and/or a second communication device.

In an implementation of this application, the sensing signal receiving device includes the third communication device, and the apparatus 2200 further includes:
a tenth processing module, configured to obtain a sensing result based on the first sensing measurement quantity; and
a twenty-first transmitting module, configured to transmit the sensing result to the first communication device and/or a second communication device.

In an implementation of this application, the sensing signal receiving device includes the third communication device, and the apparatus 2200 further includes:
a seventeenth receiving module, configured to receive a second requirement transmitted by the first communication device, where the second requirement includes a sensing requirement.

In an implementation of this application, the sensing signal receiving device includes the third communication device, and the apparatus 2200 further includes:
an eighteenth receiving module, configured to receive a sensing measurement quantity that is transmitted by the first communication device and needs to be fed back by the third communication device.

In an implementation of this application, the sensing signal receiving device includes the third communication device, and the apparatus 2200 further includes:
a nineteenth receiving module, configured to receive the second information transmitted by the first communication device, where the second information includes at least one of the following: the parameter information of the sensing signal and the resource information of the sensing signal.

In an implementation of this application, the sensing signal receiving device includes the third communication device, and the apparatus 2200 further includes:
a twentieth receiving module, configured to receive at least one of a first fuzzification mode and a second fuzzification mode transmitted by the first communication device.

In an implementation of this application, the sensing signal receiving device includes the third communication device, and the apparatus 2200 further includes:
an eleventh processing module, configured to determine at least one of the sensing measurement quantity, a first fuzzification mode, and a second fuzzification mode.

In an implementation of this application, the sensing signal receiving device includes the fourth communication device, and the apparatus 2200 further includes:
a twenty-second transmitting module, configured to transmit the first sensing measurement quantity to a second communication device or the third communication device.

In an implementation of this application, the sensing signal receiving device includes the fourth communication device, and the apparatus 2200 further includes:
a twelfth processing module, configured to obtain a sensing result based on the first sensing measurement quantity; and
a twenty-third transmitting module, configured to transmit the sensing result to a second communication device or the third communication device.

In an implementation of this application, the sensing signal receiving device includes the fourth communication device, and the apparatus 2200 further includes:
a twenty-second receiving module, configured to: receive, from a second communication device, a sensing measurement quantity that needs to be fed back by the fourth communication device and/or measurement configuration information; or receive, from the third communication device, a sensing measurement quantity that needs to be fed back by the fourth communication device and/or measurement configuration information.

In an implementation of this application, the sensing signal receiving device includes the fourth communication device, and the apparatus 2200 further includes:
a twenty-third receiving module, configured to receive at least one of a first fuzzification mode, a second fuzzification mode, and a third fuzzification mode from a second communication device.

The apparatus provided in this embodiment of this application can implement each process implemented in the method embodiment in FIG. 5 or FIG. 6, with the same technical effect achieved. To avoid repetition, details are not described herein again.

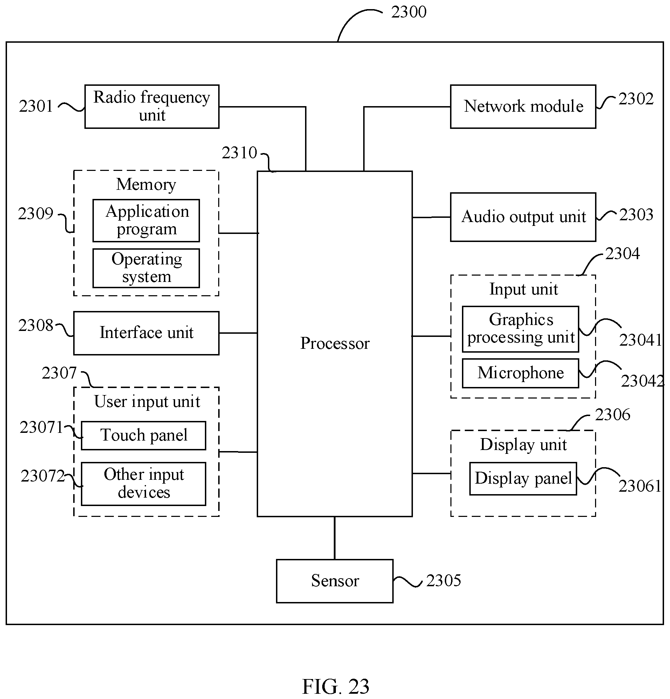

FIG. 23 is a schematic diagram of a hardware structure of a terminal for implementing an embodiment of this application.

The terminal 2300 includes but is not limited to at least some components such as a radio frequency unit 2301, a network module 2302, an audio output unit 2303, an input unit 2304, a sensor 2305, a display unit 2306, a user input unit 2307, an interface unit 2308, a memory 2309, and a processor 2310.

A person skilled in the art may understand that the terminal 2300 may further include a power supply (for example, a battery) supplying power to all components. Optionally, the power supply may be logically connected to the processor 2310 through a power management system. In this way, functions such as charge management, discharge management, and power consumption management are implemented by using the power management system. The terminal structure shown in FIG. 23 does not constitute a limitation on the terminal. The terminal may include more or fewer components than those shown in the figure, or some components are combined, or component arrangements are different. Details are not described herein again.

It should be understood that, in this embodiment of this application, the input unit 2304 may include a graphics processing unit (Graphics Processing Unit, GPU) 23041 and a microphone 23042. The graphics processing unit 23041 processes image data of a still picture or video obtained by an image capture apparatus (such as a camera) in a video capture mode or an image capture mode. The display unit 2306 may include a display panel 23061, and the display panel 23061 may be configured in a form of a liquid crystal display, an organic light-emitting diode, or the like. The user input unit 2307 includes at least one of a touch panel 23071 and other input devices 23072. The touch panel 23071 is also referred to as a touchscreen. The touch panel 23071 may include two parts: a touch detection apparatus and a touch controller. The other input devices 23072 may include but are not limited to a physical keyboard, a function button (such as a volume control button or a power button), a trackball, a mouse, and a joystick. Details are not described herein again.

In this embodiment of this application, after receiving downlink data from a network device, the radio frequency unit 2301 may transmit the downlink data to the processor 2310 for processing. In addition, the radio frequency unit 2301 may transmit uplink data to the network device. Usually, the radio frequency unit 2301 includes but is not limited to an antenna, an amplifier, a transceiver, a coupler, a low noise amplifier, a duplexer, and the like.

The memory 2309 may be configured to store software programs or instructions and various data. The memory 2309 may primarily include a first storage area for storing programs or instructions and a second storage area for storing data. The first storage area may store an operating system, an application program or instructions required by at least one function (such as an audio play function and an image play function), and the like. In addition, the memory 2309 may include a volatile memory or a non-volatile memory, or the memory 2309 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data rate SDRAM, DDR SDRAM), an enhanced synchronous dynamic random access memory (Enhanced SDRAM, ESDRAM), a synchlink dynamic random access memory (Synch Link DRAM, SLDRAM), and a direct rambus random access memory (Direct Rambus RAM, DRRAM). The memory 2309 in this embodiment of this application includes but is not limited to these and any other suitable types of memories.

The processor 2310 may include one or more processing units. Optionally, the processor 2310 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively not be integrated in the processor 2310.

The terminal provided in this embodiment of this application can implement each process implemented in the method embodiment in FIG. 3 or FIG. 6, with the same technical effect achieved. To avoid repetition, details are not described herein again.

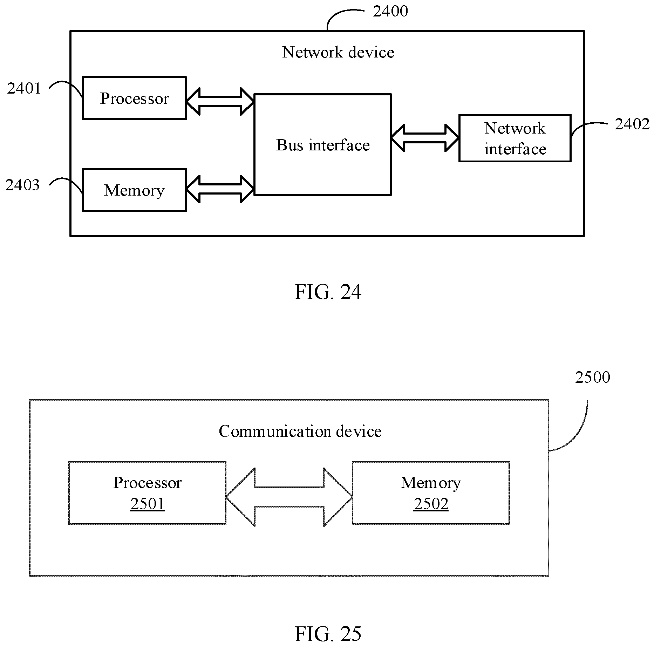

Specifically, an embodiment of this application further provides a network device. As shown in FIG. 24, the network device 2400 includes a processor 2401, a network interface 2402, and a memory 2403. The network interface 2402 is, for example, a common public radio interface (common public radio interface, CPRI).

Specifically, the network device 2400 in this embodiment of this application further includes a program or instructions stored in the memory 2403 and capable of running on the processor 2401. When the processor 2401 invokes the program or instructions in the memory 2403, the method performed by each module shown in FIG. 20, FIG. 21, or FIG. 22 is performed, with the same technical effect achieved. To avoid repetition, details are not described herein again.

Optionally, as shown in FIG. 25, an embodiment of this application further provides a communication device 2500, including a processor 2501 and a memory 2502. The memory 2502 stores a program or instructions capable of running on the processor 2501. For example, when the communication device 2500 is a terminal, and the program or instructions are executed by the processor 2501, the steps of the foregoing method embodiment in FIG. 3 or FIG. 6 are implemented. For example, when the communication device 2500 is a network device, and the program or instructions are executed by the processor 2501, the steps of the foregoing method embodiment in FIG. 3, FIG. 4, FIG. 5, or FIG. 6 are implemented, with the same technical effect achieved. To avoid repetition, details are not described herein again.

An embodiment of this application further provides a readable storage medium. The readable storage medium stores a program or instructions. When the program or instructions are executed by a processor, each process of the foregoing method embodiment in FIG. 3, FIG. 4, FIG. 5, or FIG. 6 is implemented, with the same technical effect achieved. To avoid repetition, details are not described herein again.

The processor is a processor in the terminal in the foregoing embodiment. The readable storage medium includes a computer-readable storage medium, such as a computer read-only memory ROM, a random access memory RAM, a magnetic disk, or an optical disc.

In addition, an embodiment of this application provides a chip. The chip includes a processor and a communication interface. The communication interface is coupled to the processor. The processor is configured to run a program or instructions to implement each process of the foregoing method embodiment in FIG. 3, FIG. 4, FIG. 5, or FIG. 6, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program or program product. The computer program or program product is stored in a storage medium. The computer program or program product is executed by at least one processor to implement each process of the foregoing method embodiment in FIG. 3, FIG. 4, FIG. 5, or FIG. 6, with the same technical effect achieved. To avoid repetition, details are not described herein again.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the related art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A sensing signal processing method, comprising:
receiving, by a first communication device, a first requirement from a second communication device, and determining, by the first communication device, first information based on the first requirement; or receiving, by a first communication device, first information from a second communication device; and
transmitting, by the first communication device to a third communication device or a fourth communication device, a first sensing signal corresponding to second information, wherein
the first requirement comprises at least one of the following: a fuzzification requirement related to wireless sensing, a sensing privacy requirement, and a sensing error requirement; the first information or the second information comprises at least one of the following: parameter information of the sensing signal and resource information of the sensing signal; and the first information is the same as or different from the second information.

2. The method according to claim 1, wherein the method further comprises:
receiving, by the first communication device, a second requirement from the second communication device, wherein the second requirement comprises a sensing requirement.

3. The method according to claim 2, wherein the determining, by the first communication device, first information based on the first requirement comprises:
determining, by the first communication device, the first information based on the first requirement and the second requirement.

4. The method according to claim 2, wherein the method further comprises:
transmitting, by the first communication device, the second requirement to the third communication device.

5. The method according to claim 1, wherein the method further comprises:
transmitting, by the first communication device, a sensing measurement quantity that needs to be fed back by the third communication device and/or measurement configuration information to the third communication device.

6. The method according to claim 5, wherein before the transmitting, by the first communication device, a sensing measurement quantity that needs to be fed back by the third communication device and/or measurement configuration information to the third communication device, the method further comprises:
receiving, by the first communication device, the sensing measurement quantity that needs to be fed back by the third communication device and/or the measurement configuration information from the second communication device;
or
determining, by the first communication device, the sensing measurement quantity that needs to be fed back by the third communication device and/or the measurement configuration information.

7. The method according to claim 1 or 2, wherein the method further comprises:
determining, by the first communication device, a first fuzzification mode based on the first requirement or based on the first requirement and the second requirement;
or
receiving, by the first communication device, a second fuzzification mode from the second communication device, wherein
the first fuzzification mode or the second fuzzification mode is a fuzzification mode for some or all sensing measurement quantities.

8. The method according to claim 1, wherein the method further comprises:
transmitting, by the first communication device, the second information to the third communication device, wherein the second information comprises at least one of the following: the parameter information of the sensing signal and the resource information of the sensing signal, and the first information is the same as or different from the second information.

9. The method according to claim 7, wherein the method further comprises:
transmitting, by the first communication device, at least one of the first fuzzification mode and the second fuzzification mode to the third communication device.

10. The method according to claim 1, wherein the method further comprises:
receiving, by the first communication device, a first sensing measurement quantity that is of the first sensing signal and that is transmitted by the third communication device;
or
receiving, by the first communication device, a sensing result that is of a first sensing measurement quantity and that is transmitted by the third communication device.

11. The method according to claim 10, wherein after the receiving, by the first communication device, a first sensing measurement quantity that is of the first sensing signal and that is transmitted by the third communication device, the method further comprises:
obtaining, by the first communication device, a sensing result based on the first sensing measurement quantity;
or
transmitting, by the first communication device, the first sensing measurement quantity to the second communication device.

12. The method according to claim 11, wherein the obtaining, by the first communication device, the sensing result based on the first sensing measurement quantity comprises:
converting, by the first communication device, the first sensing measurement quantity into the sensing result based on at least one of the first requirement, a second requirement, and a third fuzzification mode;
or
converting, by the first communication device, the first sensing measurement quantity into an initial sensing result, and converting, by the first communication device, the initial sensing result into the sensing result based on at least one of the first requirement, a second requirement, and a fourth fuzzification mode, wherein
the third fuzzification mode is used for fuzzification processing in the process of converting the first sensing measurement quantity into the sensing result; and the fourth fuzzification mode is used for fuzzification processing in the process of converting the initial sensing result into the sensing result.

13. The method according to claim 1, wherein after the first communication device receives a sensing result that is of a first sensing measurement quantity and that is transmitted by the third communication device, the method further comprises:
transmitting, by the first communication device, the sensing result to the second communication device.

14. The method according to claim 1, wherein the method further comprises:
receiving, by the first communication device from the fourth communication device, a first sensing measurement quantity of the first sensing signal; and
transmitting, by the first communication device, the first sensing measurement quantity to the second communication device.

15. A sensing signal processing method, comprising:
transmitting, by a second communication device, a first requirement or first information to a first communication device, wherein
the first requirement comprises at least one of the following: a fuzzification requirement related to wireless sensing, a sensing privacy requirement, and a sensing error requirement; and the first information comprises at least one of the following: parameter information of a sensing signal and resource information of the sensing signal.

16. The method according to claim 15, wherein before the transmitting, by a second communication device, first information to a first communication device, the method further comprises:
determining, by the second communication device, the first information based on the first requirement.

17. The method according to claim 15 or 16, wherein the method further comprises:
receiving, by the second communication device, the first requirement from a core network device;
or
receiving, by the second communication device, the first requirement from an application, a radio access network device, or a terminal;
or
receiving, by the second communication device, the first requirement from a network management system of an operator.

18. The method according to claim 15, wherein the method further comprises:
transmitting, by the second communication device, a second requirement to the first communication device, wherein the second requirement comprises a sensing requirement.

19. The method according to claim 18, wherein the method further comprises:
receiving, by the second communication device, the second requirement from a core network device;
or
receiving, by the second communication device, the second requirement from an application, a radio access network device, and/or a terminal;
or
receiving, by the second communication device, the second requirement from a network management system of an operator.

20. The method according to claim 15, wherein the method further comprises:
transmitting, by the second communication device to the first communication device, a sensing measurement quantity that needs to be fed back by a third communication device.

21. The method according to claim 15, wherein the method further comprises:
transmitting, by the second communication device, a second fuzzification mode to the first communication device, wherein
the second fuzzification mode is a fuzzification mode for some or all sensing measurement quantities.

22. The method according to claim 15, wherein before the second communication device transmits a second fuzzification mode to the first communication device, the method further comprises:
determining, by the second communication device, the second fuzzification mode based on the first requirement;
or
determining, by the second communication device, the second fuzzification mode based on the first requirement and a second requirement;
or
receiving, by the second communication device, the second fuzzification mode.

23. The method according to claim 22, wherein the receiving, by the second communication device, the second fuzzification mode comprises:
receiving, by the second communication device, the second fuzzification mode from a core network device;
or
receiving, by the second communication device, the second fuzzification mode from an application, a radio access network device, or a terminal;
or
receiving, by the second communication device, the second fuzzification mode from a network management system of an operator.

24. The method according to claim 15, wherein the method further comprises:
receiving, by the second communication device, a first sensing measurement quantity transmitted by a third communication device.

25. The method according to claim 24, wherein the method further comprises:
obtaining, by the second communication device, a sensing result based on the first sensing measurement quantity.

26. The method according to claim 15, wherein the method further comprises:
receiving, by the second communication device, a sensing result transmitted by the first communication device.

27. The method according to claim 25, wherein the obtaining, by the second communication device, a sensing result based on the first sensing measurement quantity comprises:
converting, by the second communication device, the first sensing measurement quantity into the sensing result based on at least one of the first requirement, a second requirement, and a third fuzzification mode;
or
converting, by the second communication device, the first sensing measurement quantity into an initial sensing result, and converting, by the second communication device, the initial sensing result into the sensing result based on at least one of the first requirement, a second requirement, and a fourth fuzzification mode, wherein
the third fuzzification mode is used for fuzzification processing in the process of converting the first sensing measurement quantity into the sensing result; and the fourth fuzzification mode is used for fuzzification processing in the process of converting the initial sensing result into the sensing result.

28. The method according to claim 25, 26, or 27, wherein the method further comprises:
transmitting, by the second communication device, the sensing result to a sensing requirement originator, wherein the sensing requirement originator is configured to perform fuzzification processing on the sensing result at an application layer to obtain a fuzzified sensing result.

29. The method according to claim 15, 16, or 18, wherein the method further comprises:
transmitting, by the second communication device, a sensing measurement quantity that needs to be fed back by a fourth communication device and/or measurement configuration information to the fourth communication device, wherein the fourth communication device is a terminal or a base station.

30. The method according to claim 29, wherein the fourth communication device is the terminal, and before the transmitting, by the second communication device, a sensing measurement quantity that needs to be fed back by a fourth communication device and/or measurement configuration information to the fourth communication device, the method further comprises:
receiving, by the second communication device, the sensing measurement quantity that needs to be fed back by the fourth communication device and/or the measurement configuration information from a third communication device;
or
determining, by the second communication device, the sensing measurement quantity that needs to be fed back by the fourth communication device and/or the measurement configuration information.

31. The method according to claim 15, wherein the method further comprises:
determining, by the second communication device, a first fuzzification mode based on the first requirement, or based on the first requirement and a second requirement, and transmitting, by the second communication device, the first fuzzification mode to a fourth communication device;
or
receiving, by the second communication device, a second fuzzification mode from a third communication device, and transmitting, by the second communication device, the second fuzzification mode to a fourth communication device, wherein
the first fuzzification mode and the second fuzzification mode are fuzzification modes for some or all sensing measurement quantities.

32. The method according to claim 15, wherein the method further comprises:
receiving, by the second communication device, a first sensing measurement quantity from a fourth communication device; and
transmitting, by the second communication device, the first sensing measurement quantity to a third communication device.

33. The method according to claim 15, wherein the method further comprises:
receiving, by the second communication device from a fourth communication device, a sensing result of a first sensing measurement quantity; and
transmitting, by the second communication device, the sensing result to a third communication device.

34. The method according to claim 32, wherein after the receiving, by the second communication device, a first sensing measurement quantity from a fourth communication device, the method further comprises:
obtaining, by the second communication device, a sensing result based on the first sensing measurement quantity.

35. The method according to claim 34, wherein the obtaining, by the second communication device, a sensing result based on the first sensing measurement quantity comprises:
converting, by the second communication device, the first sensing measurement quantity into the sensing result based on at least one of the first requirement, a second requirement, and a third fuzzification mode;
or
converting, by the second communication device, the first sensing measurement quantity into an initial sensing result, and converting, by the second communication device, the initial sensing result into the sensing result based on at least one of the first requirement, a second requirement, and a fourth fuzzification mode, wherein
the third fuzzification mode is used for fuzzification processing in the process of converting the first sensing measurement quantity into the sensing result; and the fourth fuzzification mode is used for fuzzification processing in the process of converting the initial sensing result into the sensing result.

36. The method according to claim 34, wherein the method further comprises:
transmitting, by the second communication device, the sensing result to the third communication device.

37. A sensing signal processing method, comprising:
receiving, by a sensing signal receiving device, a first sensing signal corresponding to second information and transmitted by a first communication device, wherein the second information comprises at least one of the following: parameter information of the sensing signal and resource information of the sensing signal; and
detecting, by the sensing signal receiving device, the first sensing signal to obtain a first sensing measurement quantity, wherein
the sensing signal receiving device comprises a third communication device or a fourth communication device.

38. The method according to claim 37, wherein the sensing signal receiving device comprises the third communication device, and the method further comprises:
transmitting, by the third communication device, the first sensing measurement quantity to the first communication device and/or a second communication device.

39. The method according to claim 37, wherein the sensing signal receiving device comprises the third communication device, and the method further comprises:
obtaining, by the third communication device, a sensing result based on the first sensing measurement quantity; and
transmitting, by the third communication device, the sensing result to the first communication device and/or a second communication device.

40. The method according to claim 37, wherein the sensing signal receiving device comprises the third communication device, and the method further comprises:
receiving, by the third communication device, a second requirement transmitted by the first communication device, wherein the second requirement comprises a sensing requirement.

41. The method according to claim 37, wherein the sensing signal receiving device comprises the third communication device, and the method further comprises:
receiving, by the third communication device, a sensing measurement quantity that is transmitted by the first communication device and needs to be fed back by the third communication device.

42. The method according to claim 37, wherein the sensing signal receiving device comprises the third communication device, and the method further comprises:
receiving, by the third communication device, the second information transmitted by the first communication device, wherein the second information comprises at least one of the following: the parameter information of the sensing signal and the resource information of the sensing signal.

43. The method according to claim 37, wherein the sensing signal receiving device comprises the third communication device, and the method further comprises:
receiving, by the third communication device, at least one of a first fuzzification mode and a second fuzzification mode transmitted by the first communication device.

44. The method according to claim 37, wherein the sensing signal receiving device comprises the third communication device, and the method further comprises:
determining, by the third communication device, at least one of the sensing measurement quantity, a first fuzzification mode, and a second fuzzification mode.

45. The method according to claim 37, wherein the sensing signal receiving device comprises the fourth communication device, and the method further comprises:
transmitting, by the fourth communication device, the first sensing measurement quantity to a second communication device or the third communication device.

46. The method according to claim 37, wherein the sensing signal receiving device comprises the fourth communication device, and the method further comprises:
obtaining, by the fourth communication device, a sensing result based on the first sensing measurement quantity; and
transmitting, by the fourth communication device, the sensing result to a second communication device or the third communication device.

47. The method according to claim 37, wherein the sensing signal receiving device comprises the fourth communication device, and the method further comprises:
receiving, by the fourth communication device from a second communication device, a sensing measurement quantity that needs to be fed back by the fourth communication device and/or measurement configuration information;
or
receiving, by the fourth communication device from the third communication device, a sensing measurement quantity that needs to be fed back by the fourth communication device and/or measurement configuration information.

48. The method according to claim 37, wherein the sensing signal receiving device comprises the fourth communication device, and the method further comprises:
receiving, by the fourth communication device, at least one of a first fuzzification mode, a second fuzzification mode, and a third fuzzification mode from a second communication device.

49. A sensing signal processing apparatus, applied to a first communication device, wherein the apparatus comprises:
a first receiving module, configured to receive a first requirement from a second communication device, and determine first information based on the first requirement; or receive first information from a second communication device; and
a sixth transmitting module, configured to transmit, to a third communication device or a fourth communication device, a first sensing signal corresponding to second information, wherein
the first requirement comprises at least one of the following: a fuzzification requirement related to wireless sensing, a sensing privacy requirement, and a sensing error requirement; the first information or the second information comprises at least one of the following: parameter information of the sensing signal and resource information of the sensing signal; and the first information is the same as or different from the second information.

50. A sensing signal processing apparatus, applied to a second communication device, wherein the apparatus comprises:
a tenth transmitting module, configured to transmit a first requirement or first information to a first communication device, wherein
the first requirement comprises at least one of the following: a fuzzification requirement related to wireless sensing, a sensing privacy requirement, and a sensing error requirement; and the first information comprises at least one of the following: parameter information of a sensing signal and resource information of the sensing signal.

51. A sensing signal processing apparatus, applied to a sensing signal receiving device, wherein the apparatus comprises:
a sixteenth receiving module, configured to receive a first sensing signal corresponding to second information and transmitted by a first communication device, wherein the second information comprises at least one of the following: parameter information of the sensing signal and resource information of the sensing signal; and
a first detection module, configured to detect the first sensing signal to obtain a first sensing measurement quantity, wherein
the sensing signal receiving device comprises a third communication device or a fourth communication device.

52. A communication device, comprising a processor, a memory, and a program or instructions stored in the memory and capable of running on the processor, wherein when the program or instructions are executed by the processor, the steps of the method according to any one of claims 1 to 48 are implemented.

53. A readable storage medium, wherein the readable storage medium stores a program or instructions, and when the program or instructions are executed by a processor, the steps of the method according to any one of claims 1 to 48 are implemented.
